(19) Europäisches Patentamt
European Patent Office
Office européen des brevets

(11) **EP 1 966 500 B1**

(12) **EUROPÄISCHE PATENTSCHRIFT**

(45) Veröffentlichungstag und Bekanntmachung des Hinweises auf die Patenterteilung:
**08.09.2010   Patentblatt 2010/36**

(21) Anmeldenummer: **05825888.0**

(22) Anmeldetag: **29.12.2005**

(51) Int Cl.:
**F16D 3/223** (2006.01)

(86) Internationale Anmeldenummer:
**PCT/EP2005/014097**

(87) Internationale Veröffentlichungsnummer:
**WO 2007/079762 (19.07.2007 Gazette 2007/29)**

(54) **KUGELGLEICHLAUFFESTGELENK MIT GROSSEM BEUGEWINKEL**

FIXED, CONSTANT VELOCITY BALL JOINT HAVING A GREAT DEFLECTION ANGLE

JOINT HOMOCINETIQUE À GRAND ANGLE DE FLEXION

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**10.09.2008   Patentblatt 2008/37**

(73) Patentinhaber: **GKN Driveline International GmbH**
**53797 Lohmar (DE)**

(72) Erfinder:
- **WECKERLING, Thomas**
  **53757 Sankt Augustin (DE)**
- **SANDIG, Robert**
  **87527 Sonthofen (DE)**
- **HARNISCHFEGER, Heiko**
  **36399 Freiensteinau-Weidenau (DE)**

(74) Vertreter: **Rössler, Matthias**
**KNH Patentanwälte**
**Kahlhöfer Neumann Rößler Heine**
**Postfach 10 33 63**
**40024 Düsseldorf (DE)**

(56) Entgegenhaltungen:
**EP-A- 0 661 475          US-A1- 2004 116 192**
**US-A1- 2005 070 364     US-B1- 6 319 133**
**US-B1- 6 431 988**

- **PATENT ABSTRACTS OF JAPAN Bd. 2003, Nr. 12, 5. Dezember 2003 (2003-12-05) -& JP 2004 332815 A (NTN CORP), 25. November 2004 (2004-11-25)**
- **PATENT ABSTRACTS OF JAPAN Bd. 1996, Nr. 04, 30. April 1996 (1996-04-30) -& JP 07 317791 A (TOYODA MACH WORKS LTD), 8. Dezember 1995 (1995-12-08)**
- **PATENT ABSTRACTS OF JAPAN Bd. 011, Nr. 071 (M-567), 4. März 1987 (1987-03-04) -& JP 61 228125 A (NIPPON SEIKO KK), 11. Oktober 1986 (1986-10-11)**

**Beschreibung**

Die Erfindung betrifft ein Kugelgleichlauffestgelenk umfassend ein Gelenkaußenteil mit äußeren Kugelbahnen, ein Gelenkinnenteil mit inneren Kugelbahnen, drehmomentübertragende Kugeln, die in Bahnpaaren aus äußeren Kugelbahnen und inneren Kugelbahnen geführt sind, und einen Kugelkäfig mit umfangsverteilten Käfigfenstern, in denen die Kugeln bei gestrecktem Gelenk in einer gemeinsamen Gelenkmittelebene E gehalten sind und bei Beugung des Gelenks jeweils auf eine winkelhalbierende Ebene geführt werden, mit zumindest einer Gelenköffnung des Gelenkaußenteils, die eine ringförmige Anschlagfläche bildet, und mit einer Welle, die die Gelenköffnung durchsetzt und mit dem Gelenkinnenteil verbunden ist und bei maximalem Betriebsbeugewinkel des Gelenks an der ringförmigen Anschlagfläche anschlägt, wobei die an der ringförmigen Anschlagfläche anschlagenden Mantellinien der Welle einen Öffnungskonus erzeugen. Hierbei sind alle bekannten Arten von Kugelgleichlauffestgelenken eingeschlossen, insbesondere Gegenbahngelenke, S-Bahn-Gelenke, Twin-Ball-Gelenke, AC-Gelenke (angular contact tracks). Auf die charakteristischen Merkmale dieser Gelenke wird später eingegangen.

Bei Gelenken bekannter Art wird der maximale Betriebsbeugewinkel in der Regel durch das Anschlagen einer mit dem Gelenkinnenteil verbundenen Welle an einer die Gelenköffnung am Gelenkaußenteil umgebenden Ringfläche begrenzt. Die Ringfläche ist bevorzugt konisch ausgebildet, wobei der Öffnungswinkel des Konus dann dem Betriebsbeugewinkel unter Berücksichtigung der Wellendicke entspricht.

Die US-A1-2004/0116192 betrifft ein Gegenbahngelenk mit teilweise zum Gelenkboden hin geöffneten Bahnpaaren aus inneren Kugelbahnen und äusseren Kugelbahnen mit den Merkmalen des Oberbegriffs des Patentanspruchs 1.

Bei der Zielsetzung, den Betriebsbeugewinkel zu erhöhen, wodurch der Anwendungsbereich des Gelenks erweitert werden kann, bestünde eine erste Möglichkeit darin, den Wellendurchmesser zu verringern. Sofern die Welle bereits an der Grenze ihrer Festigkeit ist, führt dies zu einer Drehmomentkapazitätreduzierung, was nicht zulässig ist.

Eine zweite Möglichkeit besteht darin, den Öffnungswinkel der genannten Ringfläche zu vergrößern. Hiermit wird jedoch zugleich der unwirksame Längsführungsbereich der jeweils äußeren Kugelbahnen bei Gelenkbeugung verkürzt, wobei die zwischen der Bahnoberfläche und der ringförmigen Anschlagfläche gebildete Bahnendkante nach innen in das Gelenkaußenteil zurücktritt. Bei den gewünschten erhöhten Beugewinkeln kann dies zur Folge haben, daß die entsprechenden Kugeln in der Gelenkbeugeebene oder bei Annäherung an diese aus den äußeren Kugelbahnen austreten und das Gelenk dadurch demontiert.

Hiervon ausgehend ist es Aufgabe der vorliegenden Erfindung, Kugelgleichlauffestgelenke vorzuschlagen, die einen erhöhten Gelenkbeugewinkel aufweisen und bei maximalem Betriebsbeugewinkel funktionsfähig bleiben. Die Lösung hierfür besteht darin, daß bei maximalem Betriebsbeugewinkel des Gelenks jeweils zumindest eine Kugel an der Gelenköffnung des Gelenkaußenteils so weit aus der äußeren Kugelbahn austritt, daß der Mittelpunkt K der Kugel einen achsparallelen Abstand $L_1$ von der Gelenkmittelebene E hat und einen achsparallelen Abstand $L_3$ vom Öffnungskonus hart, jeweils bezogen auf die Achsrichtung des Gelenkaußenteils, wobei $L_1/L_3$ kleiner 2,9, insbesondere kleiner 2,5 ist. Hierbei ist insbesondere vorgesehen, daß die zumindest eine Kugel bei maximalem Betriebsbeugewinkel innerhalb ihres Käfigfensters im Kugelkäfig gehalten wird. Mit der erfindungsgemäßen Lösung wird einerseits in Kauf genommen, daß die jeweils in der Gelenkbeugeebene liegenden, zur Öffnungsseite des Gelenkaußenteils wandernden Kugeln im Querschnitt eine reduzierte Bahnumschlingung in ihren äußeren Kugelbahnen haben und bei weiterer Abbeugung den Kontakt mit den Außenteilbahnen komplett verlieren können, so daß die Drehmomentkapazität dieser Kugeln bei Annäherung an die Gelenkbeugeebene reduziert wird, daß zugleich jedoch ein Demontieren dieser aus der optimalen Bahnumschlingung im Querschnitt betrachtet herausgeführten Kugeln aus dem Kugelkäfig und dem Gelenkaußenteil verhindert wird. Die Gelenkbeugung soll hierbei soweit vergrößert werden, daß der Bahnumschlingungswinkel $\alpha$ bis auf 0° in der Beugeebene abgesenkt wird oder sogar darüber hinaus reduziert wird. Beim weiteren Abbeugen kann die Kugel so weit aus dem Gelenkaußenteil austreten, daß sie sogar den Kontakt mit der äußeren Kugelbahn verliert. Hierbei ist insbesondere vorgesehen, daß bei maximalem Betriebsbeugewinkel $\beta_{max}$ des Gelenks jeweils zumindest eine Kugel an der Gelenköffnung des Gelenkaußenteils so weit aus der äußeren Kugelbahn austritt, daß der Mittelpunkt K der Kugel einen achsparallelen Abstand $L_1$ von der Gelenkmittelebene E hat, der größer ist, als der maximale achsparallele Abstand $L_4$ der Bahnendkante der äußeren Kugelbahn von der Gelenkmittelebene, womit $L_1 > L_4$ ist Dabei kann sich vorteilhafterweise ergeben, daß etwa zugleich mit $L_1 > L_4$ auch $L_1/L_3$ kleiner 2,2 ist

Je nach Bahnquerschnittsform kann die genannte Kugel entlang der Bahnendkante Linienkontakt haben - nämlich wenn die äußeren Kugelbahnen im Gelenkaußenteil im Querschnitt durch einen Kreisbogen definiert sind - oder Zweipunktkontakt haben - nämlich wenn die äußeren Kugelbahnen im Gelenkaußenteil im Querschnitt durch einen Ellipsenabschnitt definiert sind.

Üblicherweise ist vorgesehen, daß der maximale Betriebsbeugewinkel durch den Anschlag der mit dem Gelenkinnenteil verbundenen Welle an der ringförmigen Anschlagfläche des Gelenkaußenteils begrenzt ist. Hierbei ist typischerweise die Anschlagfläche konisch nach außen zur Gelenköffnung geöffnet.

Um ein Einsetzen der Kugeln in die Käfigfenster bei einem Montagewinkel zu ermöglichen, der größer sein muß, als der maximale Betriebsbeugewinkel, wird vorgeschlagen, daß die Welle mit dem Gelenkinnenteil in Steckverbindung miteinander verbunden ist, wobei die Welle erst nach Montage aller Kugeln in das Gelenkinnenteil eingesteckt und gesichert wird. Um anschließend im Betrieb ein Demontieren der jeweils in der Gelenkbeugeebene liegenden Kugel bei maximalem Betriebsbeugewinkel sicher zu verhindern, können verschiedene Mittel eingesetzt werden. Erfindungsgemäß wird vorgeschlagen, daß die zumindest eine Kugel bei maximalem Betriebsbeugewinkel von der Bahnendkante der äußeren Kugelbahn und einer äußeren Umfangskante des zugehörigen Käfigfensters im Kugelkäfig verliergesichert gehalten wird. In jedem Fall ist die Bedingung einzuhalten, daß bei maximalem Betriebsbeugewinkel eine Öffnungsweite S zwischen der äußeren Bahnkante des Käfigfensters und der Bahnendkante der äußeren Kugelbahn im Längsschnitt durch das Gelenk kleiner als der Kugeldurchmesser DB ist.

Bei den erfindungsgemäßen Gelenken ist vorgesehen, daß zumindest ein Teil der Bahnpaare aus äußeren Kugelbahnen und inneren Kugelbahnen bei gestrecktem Gelenk sich in der Gelenkmittelebene E in Richtung zum Boden des Gelenkaußenteils öffnet. Dies schließt auch solche Gelenke ein, bei denen sämtliche Bahnpaare aus äußeren Kugelbahnen und inneren Kugelbahnen bei gestrecktem Gelenk sich in der Gelenkmittelebene in Richtung zum Boden des Gelenkaußenteils öffnen.

Hiermit sind XX-Gegenbahngelenke und S-Bahn-Gelenke angesprochen.

In besonderer Ausgestaltung ist vorgesehen, daß sich die äußeren Kugelbahnen des genannten Teils der Bahnpaare zur Gelenköffnung hin nach radial außen erweitern und die inneren Kugelbahnen des genannten Teils der Bahnpaare zum Boden hin nach radial außen ansteigen. Hierbei kann insbesondere gelten, daß die äußeren Kugelbahnen und die inneren Kugelbahnen des genannten Teils der Bahnpaare jeweils im Längsschnitt S-förmig verlaufen.

Bei einer speziellen Ausführungsform dieser Gelenke ist vorgesehen, daß jeweils die Mittellinien zweier Bahnpaare in zueinander parallelen Ebenen verlaufen. Hiermit sind sogenannte Twin-Ball-Gelenke bezeichnet.

Desweiteren ist bei erfindungsgemäßen Gelenken vorgesehen, daß zumindest ein Teil der Bahnpaare aus äußeren Kugelbahnen und inneren Kugelbahnen sich bei gestrecktem Gelenk in der Gelenkmittelebene zur Gelenköffnung hin erweitern. Dies umfaßt zum einen auch XX Gegenbahngelenke. Soweit vorstehend vom Boden des Gelenkaußenteils gesprochen wird, ist dies immer die axial zur Eintrittsöffnung für die Welle entgegengesetzte Seite, auch wenn diese eine weitere Öffnung des Gelenkaußenteils aufweist.

Bevorzugte Ausführungsbeispiele der Erfindung sind in den Zeichnungen dargestellt und werden nachstehend beschrieben.

Figur 1    zeigt ein erfindungsgemäßes Gelenk in Form eines Gegenbahngelenks im Längsschnitt bei maximalem Beugewinkel

a) in Gesamtdarstellung
b) mit einer in der Gelenkbeugeebene austretenden Kugel als Einzelheit in vergrößerter Darstellung;

Figur 2    zeigt das Gelenk nach Figur 1 mit Bemessungsangaben zu $L_1$;
Figur 3    zeigt das Gelenk nach Figur 1 mit Bemessungsangaben zu $L_2$;
Figur 4    zeigt das Gelenk nach Figur 1 mit Bemessungsangaben zur Kugelsicherung;
Figur 5    zeigt das Gelenk nach Figur 1 mit weiteren Bemessungsangaben

a) in Gesamtdarstellung
b) mit einer in der Gelenkbeugeebene austretenden Kugel als Einzelheit in axialer Ansicht;

Figur 6    zeigt die Umschlingungssituation einer in der Gelenkbeugeebene austretenden Kugel als Einzelheit jeweils im Längsschnitt und in axialer Ansicht

a) bei einem ersten maximalen Beugewinkel $\beta_{max}$ mit bereits reduzierter Kugelumschlingung
b) bei einem zweiten maximalen Beugewinkel $\beta_{max}$ mit stark reduzierter Kugelumschlingung
c) bei einem dritten maximalen Beugewinkel $\beta_{max}$ mit komplett ausgetretener Kugel;

Figur 7    zeigt das Gelenk nach Figur 1 in einer Auslegung ähnlich Figur 6a;
Figur 8    zeigt das Gelenk nach Figur 1 in einer Auslegung ähnlich Figur 6b;
Figur 9    zeigt das Gelenk nach Figur 1 in einer Auslegung ähnlich Figur 6c;
Figur 10   zeigt ein Gegenbahngelenk nach Figur 1 mit sechs Kugeln

a) in axialer Ansicht
b) im geraden Längsschnitt A-A;

Figur 11    zeigt das Gegenbahngelenk nach Figur 10

          a) in axialer Ansicht
          b) im abgewinkelten Längsschnitt A-A;

Figur 12    zeigt ein Gegenbahngelenk nach Figur 1 mit acht Kugeln

          a) in axialer Ansicht
          b) im Längsschnitt A-A
          c) im Längsschnitt B-B;

Figur 13    zeigt ein Gegenbahngelenk mit sechs Kugeln in einer zweiten Ausführung

          a) in axialer Ansicht
          b) im Längsschnitt A-A;

Figur 14    zeigt ein S-Bahn-Gelenk mit umgekehrter Bahnöffnung mit sechs Kugeln

          a) in axialer Ansicht
          b) im Längsschnitt A-A;

Figur 15    zeigt das Gelenk nach Figur 10 mit sechs Kugeln bei maximalem Beugewinkel

          a) in axialer Ansicht
          b) mit einer austretenden Kugel im Längsschnitt
          c) mit einer austretenden Kugel in axialer Ansicht;

Figur 16    zeigt ein S-Bahn-Gelenk mit umgekehrter Bahnöffnung mit acht Kugeln

          a) in axialer Ansicht
          b) im Längsschnitt A-A;

Figur 17    zeigt das Gelenk nach Figur 12 mit acht Kugeln bei maximalem Beugewinkel

          a) in axialer Ansicht
          b) mit einer austretenden Kugel im Längsschnitt
          c) mit einer austretenden Kugel in axialer Ansicht;

Figur 18    zeigt ein nicht erfindungsgemäßes UF-Gelenk mit sechs Kugeln

          a) in axialer Ansicht
          b) im Längsschnitt A-A;

Figur 19    zeigt ein nicht erfindungsgemäßes AC-Gelenk mit sechs Kugeln

          a) in axialer Ansicht
          b) im Längsschnitt A-A;

Figur 20    zeigt ein Twin-Ball-Gelenk in einer ersten Darstellung

          a) in axialer Ansicht
          b) im Längsschnitt A-A;

Figur 21    zeigt ein Twin-Ball-Gelenk in einer zweiten Darstellung

          a) in axialer Ansicht
          b) im Längsschnitt A-A;

Figur 22    zeigt einen Schnitt durch ein Gegenbahngelenk mit sechs Kugeln nach Figur 10 mit der Größe $L_4$;

Figur 23    zeigt einen Schnitt durch ein Gegenbahngelenk mit sechs Kugeln nach Figur 13 mit der Größe $L_4$;

Figur 24    zeigt einen Schnitt durch nich erfindungsgemäßes ein UF-Gelenk mit sechs Kugeln nach Figur 15 oder einen ersten Schnitt durch ein Gegenbahngelenk mit acht Kugeln nach Figur 12, jeweils mit der Größe $L_4$;

Figur 25    zeigt einen Schnitt durch ein S-Bahn-Gelenk mit sechs Kugeln nach Figur 11 oder einen zweiten Schnitt durch ein Gegenbahngelenk mit acht Kugeln nach Figur 12, jeweils mit der Größe $L_4$;

Figur 26    zeigt einen Schnitt durch ein AC-Gelenk mit sechs Kugeln nach Figur 16.

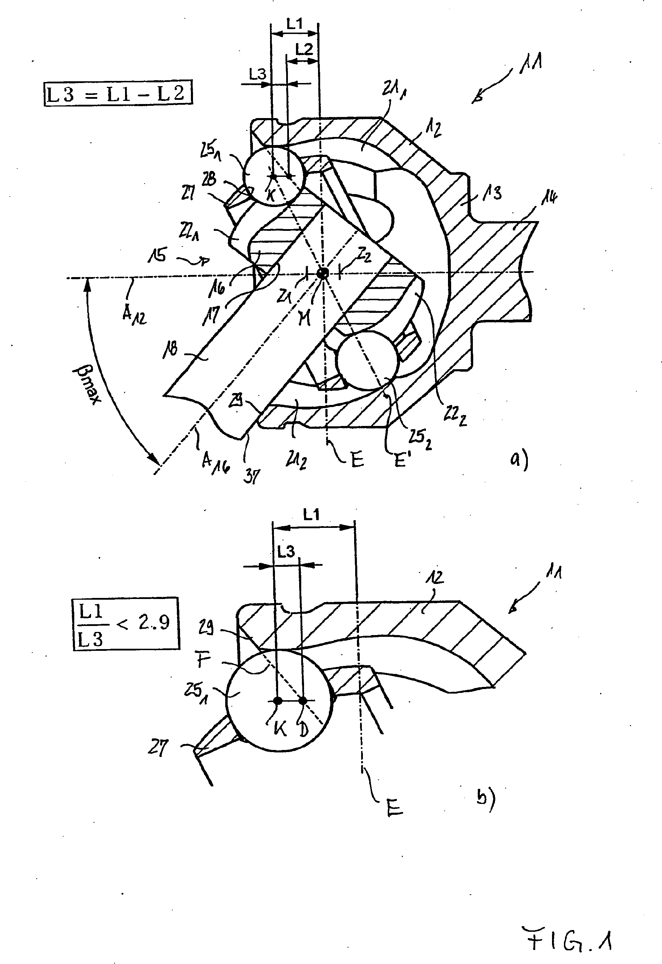

In Figur 1 ist ein erfindungsgemäßes Kugelgleichlauffestgelenk 11 bei maximalem Beugewinkel im Längsschnitt gezeigt. Das Gelenk umfaßt ein Gelenkaußenteil 12 mit einem Boden 13 und einem angeformten Wellenzapfen 14 und ist damit als sogenanntes Monoblockgelenk ausgebildet. Dem Boden 13 gegenüberliegend ist die Gelenköffnung 15 im Gelenkaußenteil bezeichnet. Das Gelenk umfaßt weiterhin ein Gelenkinnenteil 16 mit einer Einstecköffnung 17, in die eine Welle 18 eingesteckt ist, die die Öffnung 15 durchsetzt. Das Gelenk ist als Gegenbahngelenk ausgebildet und zeigt in der oberen Bildhälfte eine erste äußere Kugelbahn $21_1$ im Gelenkaußenteil 12 und eine erste innere Kugelbahn $22_1$ im Gelenkinnenteil 16. Das Gelenk umfaßt weiterhin in der unteren Bildhälfte eine zweite äußere Kugelbahn $21_2$ im Gelenkaußenteil 12 und eine zweite innere Kugelbahn $22_2$ im Gelenkinnenteil 16. Jeweils in den Bahnpaaren $21_1$, $22_1$ und $21_2$, $22_2$ sind drehmomentübertragende Kugeln $25_1$, $25_2$ eingesetzt. Die Kugeln sind in einer gemeinsamen Ebene durch einen Kugelkäfig 27 gehalten, wobei die Kugeln in umfangsverteilten Käfigfenstern 28 einsitzen. Nach der Definition eines Gegenbahngelenks öffnen sich die ersten Bahnpaare $21_1$, $22_1$ bei gestrecktem Gelenk in einer Gelenkmittelebene E zum Boden 13 hin, während sich die zweiten Bahnpaare $21_2$, $22_2$ bei gestrecktem Gelenk in der Gelenkmittelebene E zur Öffnung 15 hin öffnen. Die ersten Bahnpaare $21_1$, $21_2$ sind hierbei nach Art von S-Bahnen mit umgekehrter Bahnöffnung ausgeführt, wobei die ersten äußeren Kugelbahnen $21_1$ einen Bogen mit einem Radius um einen Mittelpunkt $Z_2$ beschreiben, der nahe der Öffnung 15 stetig in einen Bogen mit einem Gegenradius übergeht, während die ersten inneren Kugelbahnen $22_1$ bei gestrecktem Gelenk einen Bogen mit einem Radius um einen Mittelpunkt $Z_1$ beschreiben, der zum Boden 13 hin stetig in einen Bogen mit einem Gegenradius übergeht, so daß zueinander symmetrische S-förmige Bahnverläufe vorliegen. Die Mittelpunkte $Z_1$, $Z_2$ sind um gleiche Beträge axial entgegengesetzt zur Mittelebene E versetzt.

Die zweiten Bahnpaare $21_2$, $22_2$ sind nach Art der Bahnen von AC-Gelenken mit S-Schlag ausgeführt, wobei die zweiten äußeren Kugelbahnen $21_2$ im wesentlichen einen Bogen mit einem Radius um den Mittelpunkt $Z_2$ beschreiben, der nahe der Öffnung 15 stetig in einen Bogen mit einem Gegenradius übergeht, während die zweiten inneren Kugelbahnen $22_2$ bei gestrecktem Gelenk im wesentlichen einen Bogen mit einem Radius um den Mittelpunkt $Z_1$ beschreiben, der zum Boden 13 hin stetig in einen Bogen mit einem Gegenradius übergeht. Bahnendbereiche können jeweils abweichend von den genannten Bögen verlaufen. Über dem Umfang des Gelenks wechseln sich erste Bahnpaare $21_1$, $22_1$ und zweite Bahnpaare $21_2$, $22_2$ ab.

In der dargestellten maximalen Beugestellung des Gelenks, die durch den maximalen Betriebsbeugewinkel $\beta_{max}$ bezeichnet ist, der zwischen der Achse A12 des Gelenkaußenteils 12 und der Achse A16 des Gelenkinnenteils 16 aufgespannt ist, schlägt die Welle 18 mit einer Mantellinie 37 an einer die Gelenköffnung 17 umgebenden konischen ringförmigen Anschlagfläche 29 an und begrenzt so den Beugewinkel. In dieser Position hat die in der Beugeebene liegende Kugel $25_1$ in der ersten äußeren Kugelbahn $21_1$ ihre axial äußerste Position errecht, bei der der Umfangskontaktwinkel zwischen Kugel $25_1$ und äußerer Kugelbahn $21_1$ kleiner ist, als bei gestrecktem Gelenk oder geringeren Beugewinkeln. Die Lage der in der Gelenkbeugeebene aus der äußeren Kugelbahn $21_1$ teilweise austretenden Kugel $25_1$ ist durch den Abstand ihres Kugelmittelpunktes K in zur Längsachse A12 des Gelenkaußenteils in paralleler Richtung von der Gelenkmittelebene E bezeichnet, der mit $L_1$ angegeben ist, und durch den Abstand des Kugelmittelpunktes K von der Konusfläche F in ebenfalls zur Längsachse A12 des Gelenkaußenteils paralleler Richtung, und der mit $L_3$ definiert ist. Erfindungsgemäß ist der Quotient aus $L_1$ und $L_3$ < 1,9. Die Differenz aus $L_1$ und $L_3$ ist mit $L_2$ bezeichnet, die sich auf einen horizontalen Abstand eines Durchstoßpunktes D eines achsparallelen Strahles durch den Kugelmittelpunkt K von der Gelenkmittelebene E ergibt. Der Öffnungskonus F wird durch die jeweils äußeren Mantellinien 37 der Welle 18 gebildet und stimmt mit dem Öffnungswinkel der ringförmigen Anschlagfläche 29 überein.

Die erfindungsgemäße Konfiguration ist durch einen erweiterten Konuswinkel der Anschlagfläche 29 bestimmt, die eine vergrößerte Abbeugung der Achse A16 des Gelenkinnenteils 16 gegenüber der Achse A12 des Gelenkaußenteils 12 zuläßt. Die gleichen Gegebenheiten, wie sie hier beispielhaft an dem ersten Bahnpaar $21_1$, $22_1$ mit der ersten Kugel $25_1$ dargestellt sind, ergeben sich bei Gelenken, die nicht dem Gegenbahnprinzip entsprechen, auch am zweiten Bahnpaar $21_2$, $22_2$ für die zweite Kugel $25_2$ bei entgegengesetzt in der gleichen Ebene gebeugtem Gelenk.

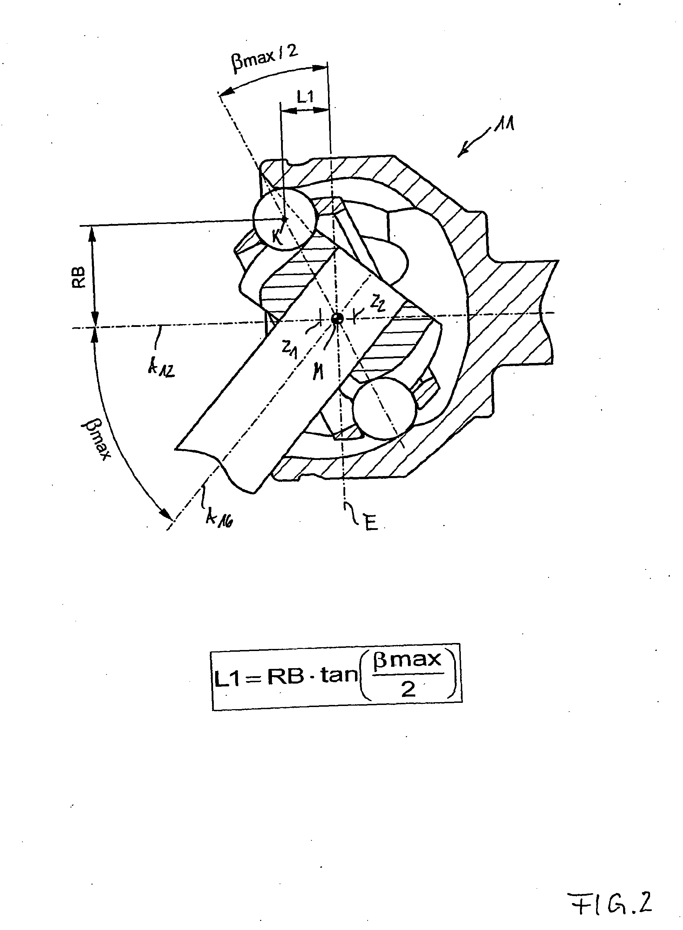

In Figur 2 ist die Darstellung aus Figur 1a wiederholt, wobei auf eine Bezifferung und die entsprechende Beschreibung insoweit weitgehend verzichtet wird. Es ist eine rechnerische Herleitung des Horizontalabstandes $L_1$ des Kugelmittelpunktes K von der Gelenkmittelebene E angegeben, in die der radiale Abstand RB des Kugelmittelpunktes K von der Längsachse A12 und der maximale Betriebsbeugewinkel $\beta_{max}$ in der Weise eingehen, daß gilt

$$L1 = RB \cdot \tan\left(\frac{\beta max}{2}\right)$$

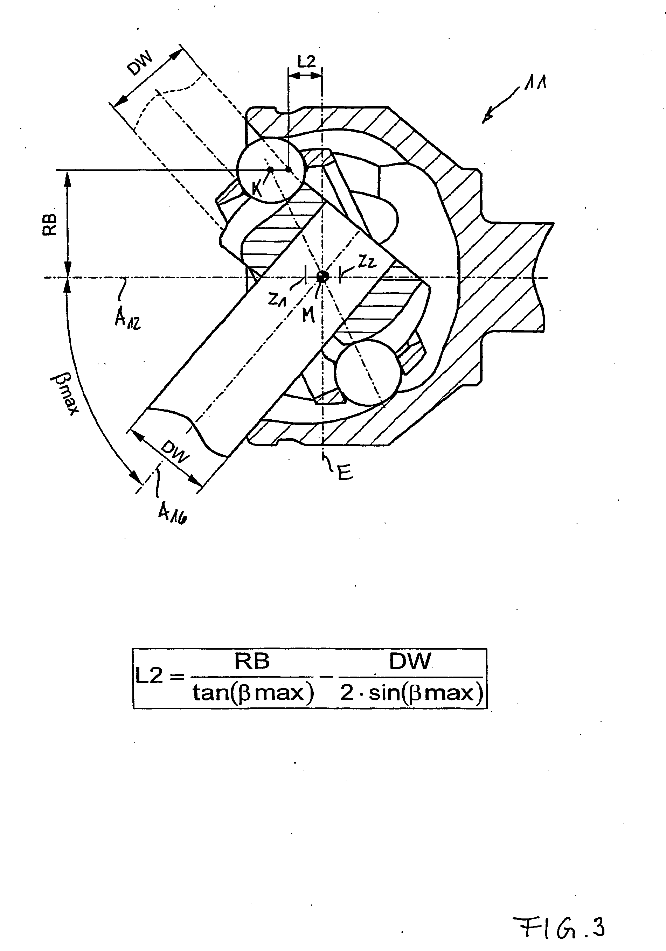

In Figur 3 ist die Darstellung aus Figur 1a wiederholt, wobei auf eine Bezifferung und die entsprechende Beschreibung insoweit weitgehend verzichtet wird. Es ist eine rechnerische Herleitung des Horizontalabstandes $L_2$ des Durchstoßpunktes D von der Gelenkmittelebene E angegeben, in die der radiale Abstand RB des Kugelmittelpunktes K von der Längsachse A12, die Wellendicke DW der Welle 16 und der maximale Betriebsbeugewinkel $\beta_{max}$ in der Weise eingehen, daß gilt

$$L2 = \frac{RB}{\tan(\beta max)} - \frac{DW}{2 \cdot \sin(\beta max)}$$

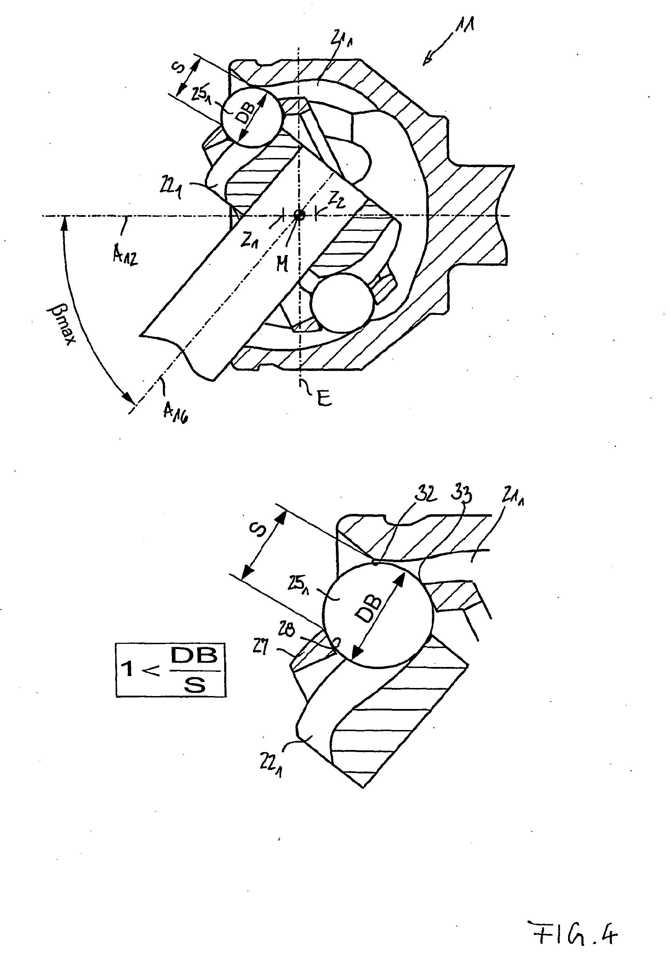

In Figur 4 ist in beiden Darstellungen das Gelenk nach Figur 1a in der gleichen Darstellung gezeigt, so daß auf die Verwendung von Bezugsziffern und die entsprechende Beschreibung weitgehend verzichtet wird. Es ist ergänzend angezeigt, daß bei maximalem Betriebsbeugewinkel $\beta_{max}$ der größte Abstand S in der Gelenkbeugeebene zwischen einer äußeren Umfangskante 33 des Käfigfensters 28 und der Bahnendkante 32 kleiner ist als der Kugeldurchmesser DB der Kugel $25_1$, so daß gilt

$$S < DB.$$

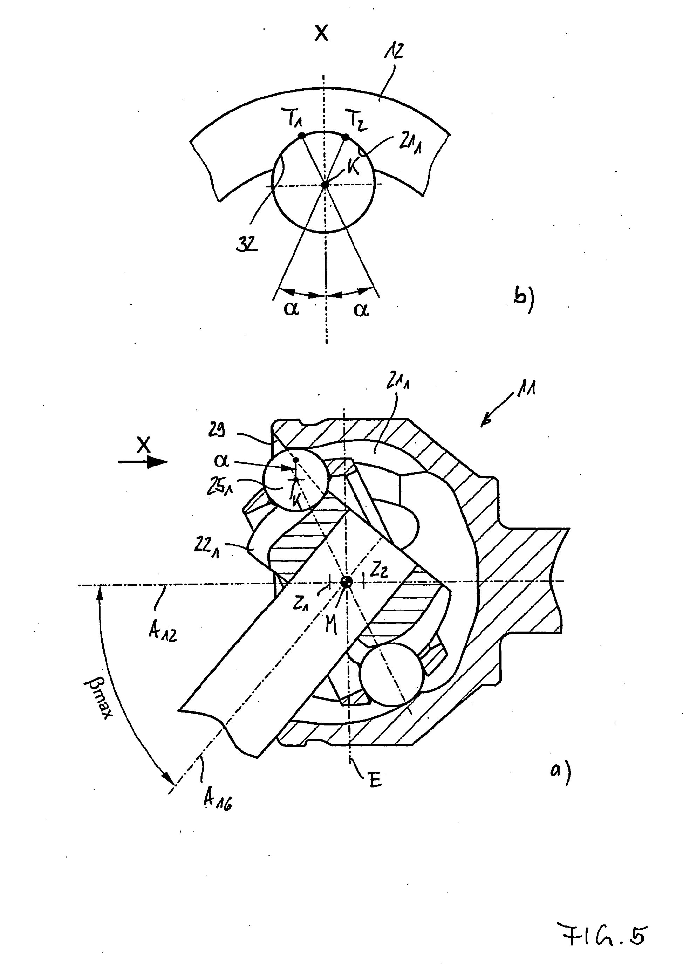

In Figur 5 ist in Darstellung a) das Gelenk nach Figur 1a in gleicher Darstellung wiedergegeben, so daß auf die Verwendung von Bezugsziffern und die entsprechende Beschreibung weitgehend verzichtet wird. Der Kontakt der in der Gelenkbeugeebene austretenden Kugel $25_1$ liegt an einer Bahnendkante 32, die zwischen der Bahnflankenoberfläche der äußeren Kugelbahn $21_1$ und der ringförmigen Anschlagfläche 29 gebildet wird, wobei die äußeren Kugelkontaktpunkte T1, T2 mit der Bahnendkante 32 vor bzw. hinter der im Längsschnitt geschnitten dargestellten Ebene liegen. Der Bahnumschlingungswinkel für die Kugel, der in dieser Position noch wirksam ist, ist von der Beugeebene aus jeweils nach beiden Seiten $\alpha$. Dieser Bahnumschlingungswinkel $\alpha$ bildet nur einen Teilwinkel des vollen Bahnöffnungswinkels im Querschnitt. In der dargestellten Position ist die Kugel $25_1$ noch im vollen Umschlingungsquerschnitt der inneren Kugelbahn $22_1$ gehalten.

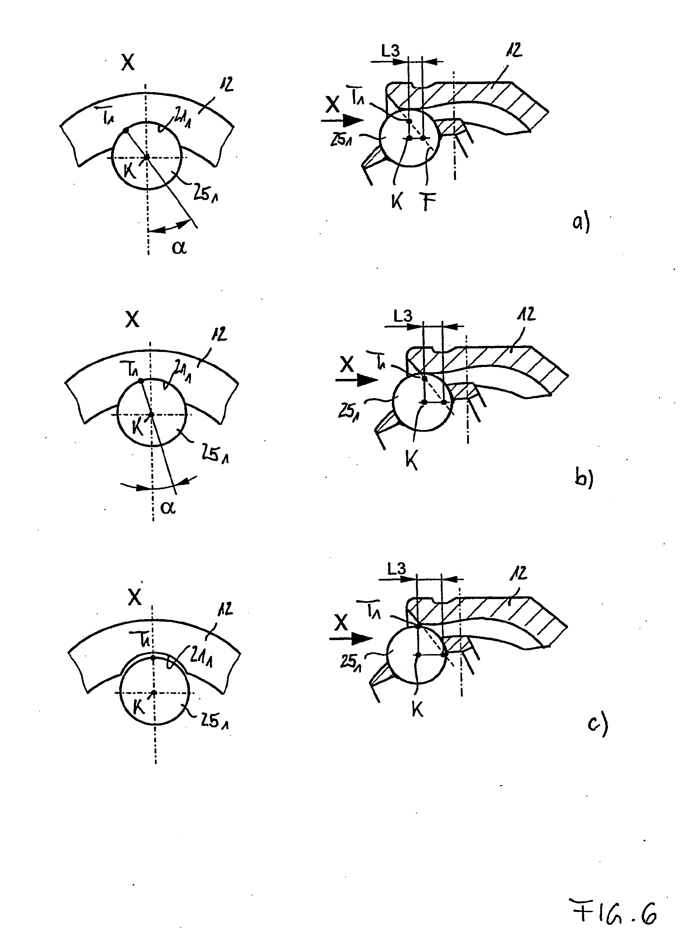

In Figur 6 ist die in Figur 5 dargestellte Situation der in der Gelenkbeugeebene liegenden austretenden Kugel $25_1$ bei unterschiedlich großen maximalen Beugewinkeln dargestellt, wobei jeweils nur einer der äußeren Kugelkontaktpunkte T1 und der zugehörige Bahnumschlingungswinkel $\alpha$ für eine Bahnhälfte dargestellt ist.

In der Darstellung a) ist in einer ersten Auslegung der erfindungsgemäße maximale Betriebsbeugewinkel relativ gering, so daß der äußere Kugelkontaktpunkt T1 relativ tief auf der Konusöffnungsfläche F liegt und $L_3$ einen kleinen Wert annimmt. Die Kugelumschlingung umfaßt jedoch nicht mehr den ganzen Querschnitt der äußeren Kugelbahn, sondern ist bereits reduziert.

In der Darstellung b) ist ein größerer maximaler Betriebsbeugewinkel in einer zweiten Auslegung dargestellt, wobei $L_3$ vergrößert ist und der Bahnumschlingungswinkel $\alpha$ bis zum äußeren Kugelkontaktpunkt T1 wesentlich geringer ist. Hierbei ist $L_3$ und damit $L_1$ wesentlich größer geworden. Die Drehmomentübertragungskapazität der Kugel $25_1$ ist hierbei geringer als zuvor.

In Darstellung c) ist ein nochmals größerer maximaler Betriebsbeugewinkel in einer dritten Auslegung dargestellt, wobei $L_3$ so weit vergrößert ist und der Bahnumschlingungswinkel a erst zu Null wird und dann die Kugel den Kontakt mit dem Außenteil komplett verliert. Die Drehmomentübertragungskapazität der Kugel $25_1$ wird hierbei zu Null. Da der Abstand S zwischen Außenteilkante und Käfigkante immer noch kleiner ist, als der Kugeldurchmesser DB, wird selbst in dieser Stellung die Kugel noch im Gelenkaußenteil gehalten.

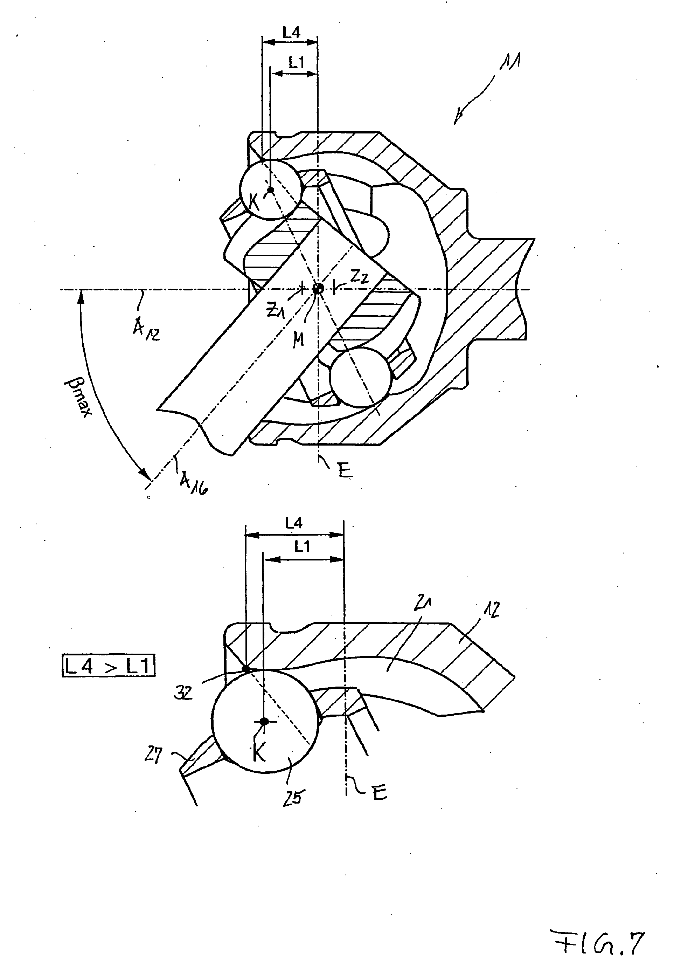

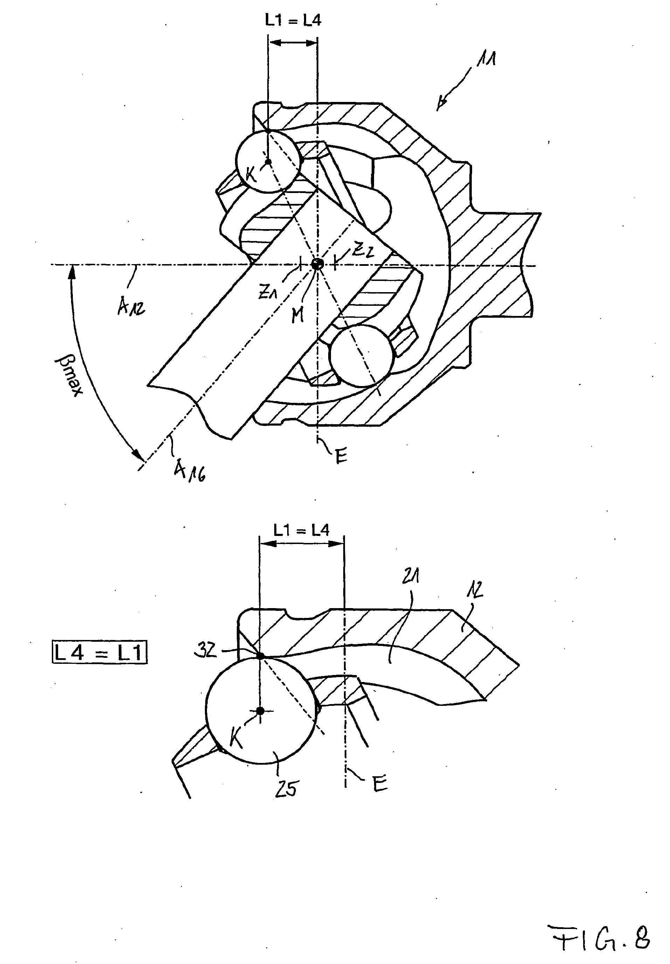

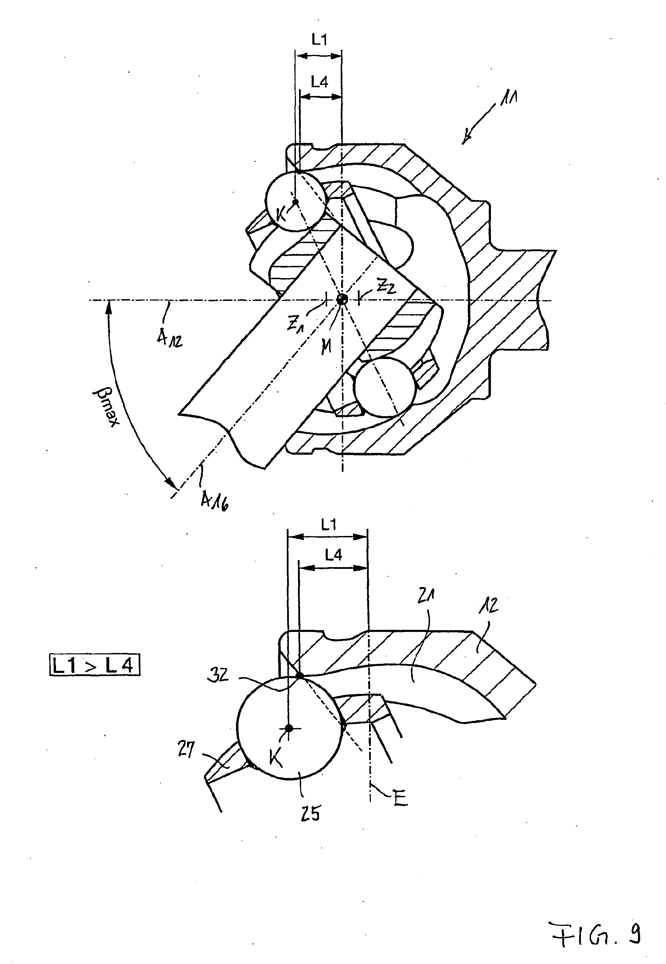

Die Figuren 7 bis 9 werden nachstehend gemeinsam beschrieben. Es ist jeweils im wesentlichen ein Gelenk wie in Figur 1 dargestellt, wobei wie in den Figuren 2 und 3 nur einige wesentliche Einzelheiten beziffert sind. Insoweit wird auf die vorhergehende Beschreibung Bezug genommen. In den Figuren, die das Gelenk jeweils bei maximalem Betriebsbeugewinkel $\beta_{max}$ zeigen, ist neben dem achsparallelen Abstand $L_1$ des Kugelmittelpunkts K von der Gelenkmittelebene E auch jeweils der maximale achsparallele Abstand $L_4$ der Bahnendkante 32 von der Gelenkmittelebene E eingezeichnet. Aufgrund unterschiedlicher Auslegung des Gelenks ist in Figur 7 $L_4 > L_1$, in Figur 8 $L_4 = L_1$ und in Figur 9 $L_4 < L_1$. Damit liegt die Kugel mit ihrem Mittelpunkt K in Figur 7 nur wenig außerhalb der äußeren Kugelbahn, in Figur 8 erheblich weiter, und in Figur 9 hat der größte Kugelquerschnitt die äußere Kugelbahn über die Bahnendkante hinaus verlassen. Während die Kugel in den Ausführungen nach den Figuren 7 und 8 in unterschiedlich reduziertem Maße noch Drehmoment übertragen kann, ist dies in der Ausführung nach Figur 9 nicht gegeben.

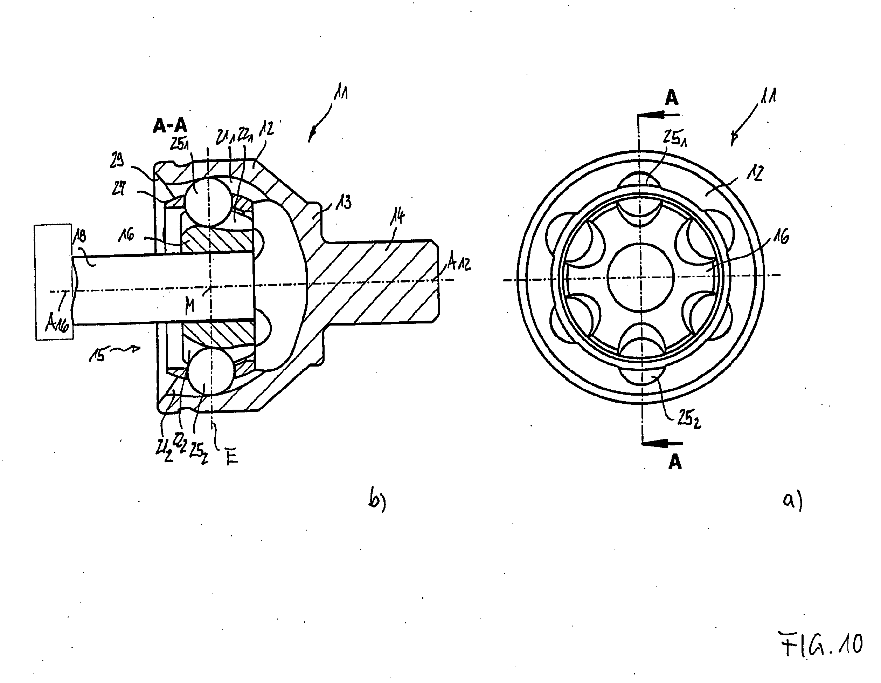

In Figur 10 ist das Gelenk nach den Figuren 1 bis 9 in einer Ausführung mit sechs Kugeln in gestreckter Darstellung gezeigt. Gleiche Einzelheiten sind mit gleichen Bezugsziffern versehen wie in Figur 1. Auf die vorangehende Beschreibung wird Bezug genommen. Es ist der jeweils S-förmige Bahnverlauf der ersten äußeren Kugelbahn $21_1$ und der ersten inneren Kugelbahn $22_1$ zu erkennen, der sich jeweils auf die Bahngrundlinien und ebenso auf die hier nicht dargestellten Bahnmittellinien bezieht. Die Bahnmittellinien sind jeweils spiegelsymmetrisch in Bezug auf die Gelenkmittelebene E. In der Gelenkmittelebene E öffnen sich die ersten Bahnpaare $21_1$, $21_2$ in Richtung zum Boden 13.

Die zweiten Bahnpaaren aus äußeren Bahnen $21_2$ und zweiten inneren Bahnen $22_2$ bestehen überwiegend aus Kreisbögen mit axial versetzten Mittelpunkten, an die sich nahe der Öffnung 15 jeweils stetig Bögen mit einem Gegenradius anschließen. Auch hierbei bildet sich die Bahnform am Bahngrund und ebenso an den nicht dargestellten Bahnmittellinien ab, die in Bezug auf die Gelenkmittelebene E zueinander symmetrisch sind. Die Bahnpaare $21_2$, $22_2$ öffnen sich in der Gelenkmittelebene E zur Öffnungsseite 15 hin.

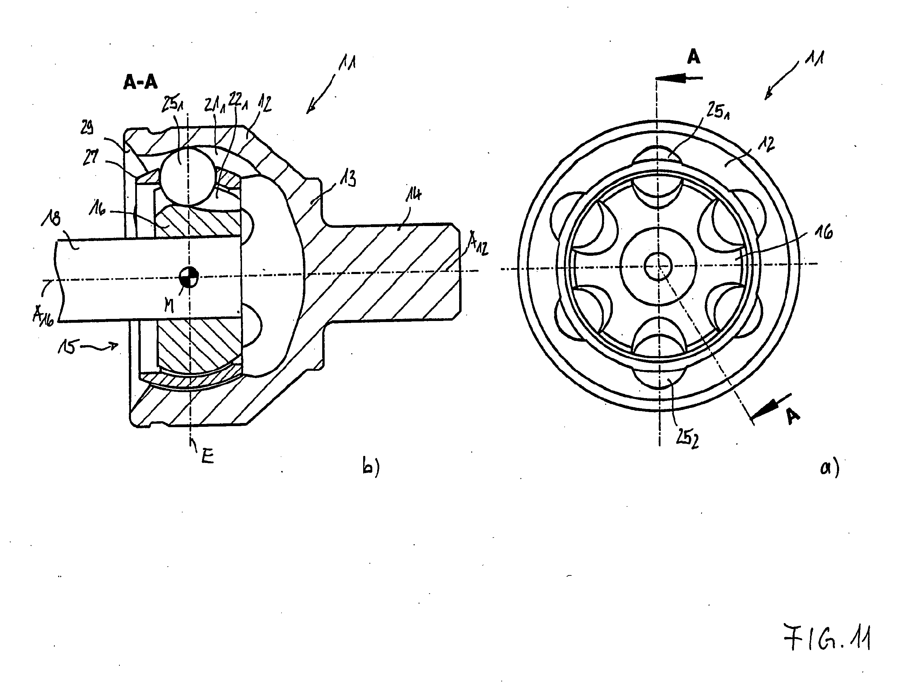

In Figur 11 ist das Gelenk nach Figur 10 im Längsschnitt in einem abgewinkelten Schnitt dargestellt, wobei zusätzlich erkennbar wird, daß zwischen dem Kugelkäfig 27 und dem Gelenkaußenteil 12 einerseits und dem Gelenkinnenteil 16 andererseits Radialspiel vorhanden ist. Dies ist dadurch möglich, daß sich die auf die Kugeln einwirkenden Bahnkräfte wechselweise ausgleichen und sich der Kugelkäfig damit nicht unmittelbar an einem der Gelenkbauteile (13, 16) axial abstützen muß.

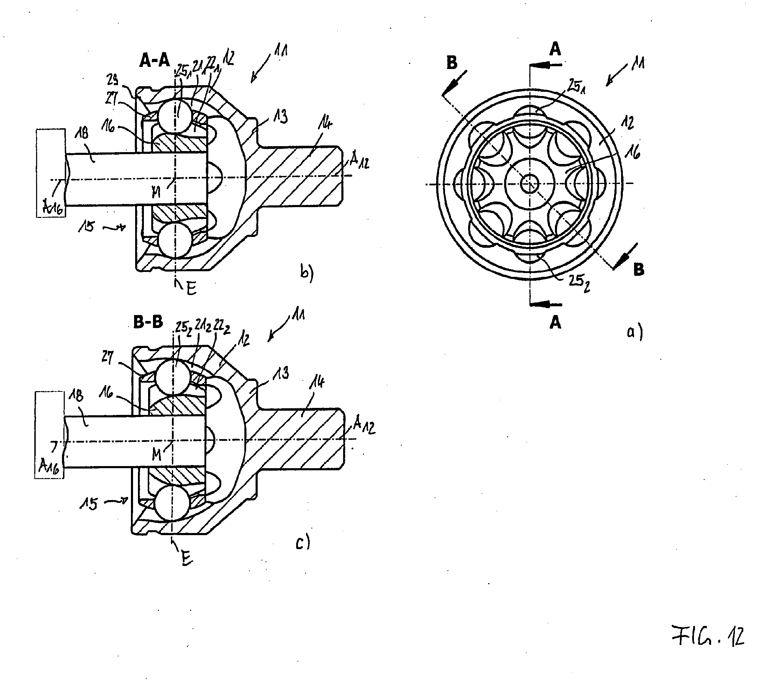

In Figur 12 ist das Gelenk nach den Figuren 1 bis 9 in einer Ausführung mit acht Kugeln in gestreckter Darstellung gezeigt. Gleiche Einzelheiten sind mit gleichen Bezugsziffern versehen wie in Figur 1. Auf die vorangehende Beschreibung wird Bezug genommen. Es ist der jeweils S-förmige Bahnverlauf der ersten äußeren Kugelbahn $21_1$ und der ersten inneren Kugelbahn $22_1$ zu erkennen, der sich jeweils auf die Bahngrundlinien und ebenso auf die hier nicht dargestellten Bahnmittellinien bezieht. Die Bahnmittellinien sind jeweils spiegelsymmetrisch in Bezug auf die Gelenkmittelebene E. In der Gelenkmittelebene E öffnen sich die ersten Bahnpaare $21_1$, $21_2$ in Richtung zum Boden 13.

Die zweiten Bahnpaaren aus äußeren Bahnen $21_2$ und zweiten inneren Bahnen $22_2$ bestehen überwiegend aus Kreisbögen mit axial versetzten Mittelpunkten, an die sich nahe der Öffnung 15 jeweils stetig Bögen mit einem Gegenradius anschließen. Auch hierbei bildet sich die Bahnform am Bahngrund und ebenso an den nicht dargestellten Bahnmittellinien ab, die in Bezug auf die Gelenkmittelebene E zueinander symmetrisch sind. Die Bahnpaare $21_2$, $22_2$ öffnen sich in der Gelenkmittelebene E zur Öffnungsseite 15 hin.

Die in den Figuren 1 bis 12 angegebene Gelenkbauform hat die Kurzbezeichnung SX-Gelenke.

Im folgenden werden Gelenkbauarten beschrieben, die von dem Gegenbahngelenk nach den vorangehenden Figuren abweichen, auf die jedoch der Gegenstand der vorliegenden Erfindung mit seinen wesentlichen Merkmalen uneingeschränkt angewendet werden kann, ohne daß dies in der Figurenbeschreibung nochmals besonders angesprochen wird.

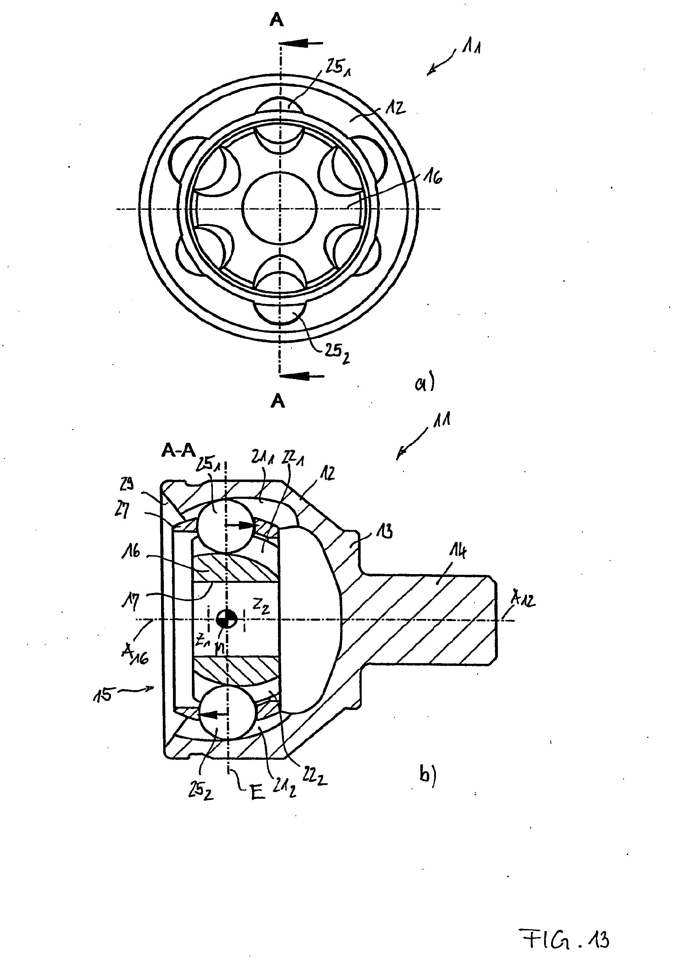

In Figur 13 ist ein Gegenbahngelenk ähnlich den vorangegangenen Figuren 10 bis 12 dargestellt, wobei jedoch keine Bahnen mit einem S-förmigen Verlauf vorkommen. Vielmehr sind sowohl die ersten äußeren Kugelbahnen $21_1$ und die ersten inneren Kugelbahnen $22_1$ jeweils im wesentlichen durch Kreisbögen um die axial versetzten Mittelpunkte Z1 und Z2 gebildet, ebenso die zweiten äußeren Kugelbahnen $21_2$ und die zweiten inneren Kugelbahnen $22_2$ durch Kreisbögen um die Mittelpunkte Z1 und Z2 gebildet. Hierbei öffnen sich die ersten Bahnpaare $21_1$, $22_1$ in der Gelenkmittelebene E in Richtung zum Boden 13, so daß unter Drehmoment auf die Kugeln zu diesem hin gerichtete axiale Kräfte einwirken, während sich die zweiten Bahnpaare $21_2$, $22_2$ in der Gelenkmittelebene E zur Öffnungsseite 15 hin öffnen, so daß auf die zweiten Kugeln $25_2$ axiale Kräfte in Richtung zur Öffnung 15 hin wirken. Über dem Umfang gleichen sich die Kugelkräfte aus, so daß der Käfig axial nicht notwendigerweise unmittelbar in einem der Gelenkbauteile (12, 16) abgestützt werden muß.

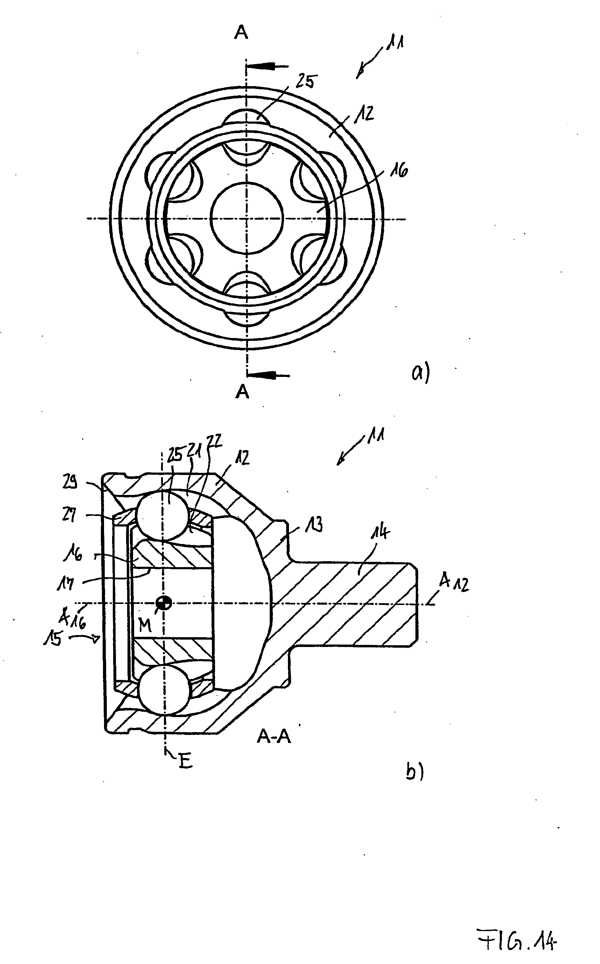

In Figur 14 ist ein Gleichlaufgelenk mit sechs Kugeln dargestellt, wobei gleiche Einzelheiten mit gleichen Bezugsziffern wie in den vorangegangenen Figuren bezeichnet sind. Alle Bahnpaare sind über dem Umfang untereinander gleich gestaltet, wobei die äußeren Kugelbahnen 21 und die inneren Kugelbahnen 22 in ihrer Gestaltung den ersten Bahnpaaren ($21_1$, $22_1$) aus Figur 1 entsprechen. Es sind somit S-Bahnen mit umgekehrter Bahnöffnung, d. h. die Bahnpaare öffnen sich in der Gelenkmittelebene E in Richtung zum Boden 13 hin.

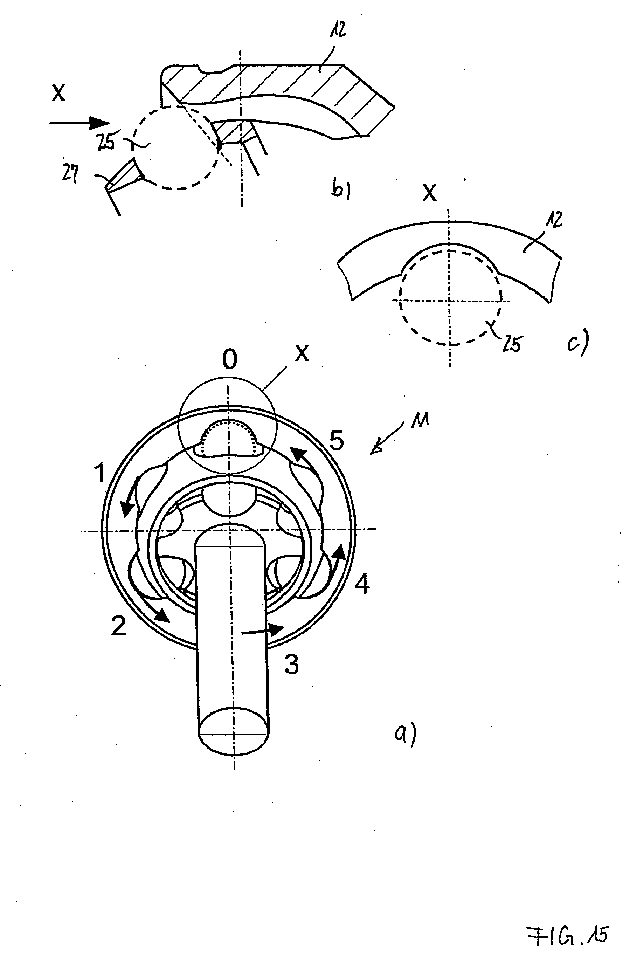

In Figur 15 ist das Gelenk nach Figur 10, d. h. also ein Gelenk nach Art eines Sechs-Kugel-SX-Gelenkes in maximaler Beugestellung gezeigt. Gleiche Einzelheiten sind mit gleichen Bezugsziffern bezeichnet wie in Figur 1. Auf die vorangehende Beschreibung wird Bezug genommen. Alle Bahnpaare 21, 22 entsprechen in ihrer Gestaltung den ersten Bahnpaaren ($21_1$, $22_1$) aus Figur 1. Es ist zu erkennen, daß eine der Kugeln 25 in der Gelenkbeugeebene (0) so weit aus ihrer äußeren Kugelbahn 21 ausgetreten ist, daß sie den Kontakt zum Außenteil komplett verliert, allerdings ohne daß ein Verlieren der Kugel 25 möglich ist. Die Drehmomentübertragung wird von den fünf übrigen Kugeln (1-5) überwiegend wahrgenommen.

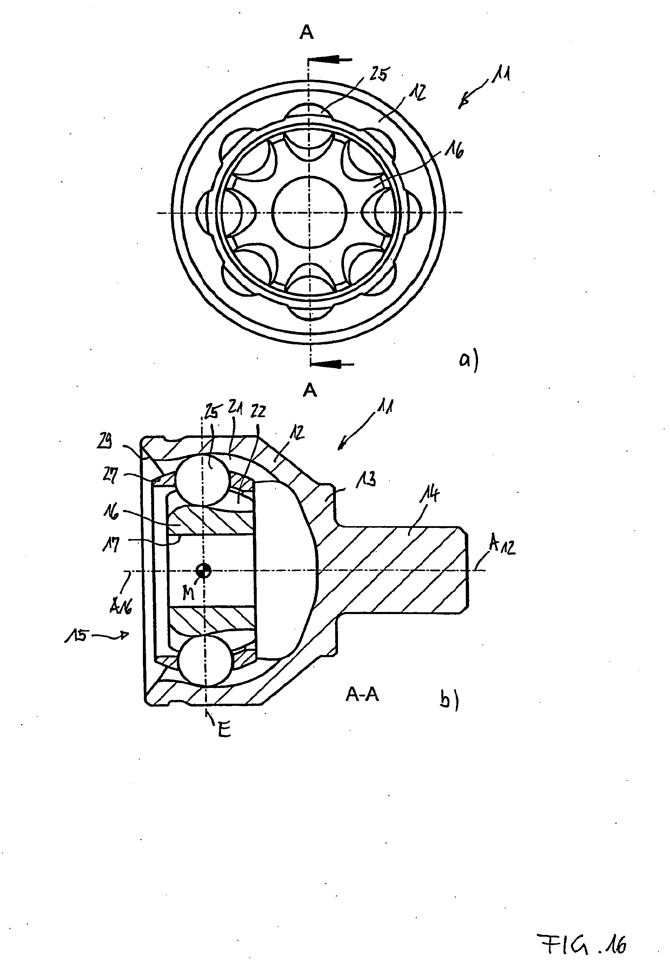

In Figur 16 ist ein Gleichlaufgelenk mit acht Kugeln dargestellt, wobei gleiche Einzelheiten mit gleichen Bezugsziffern wie in den vorangegangenen Figuren bezeichnet sind. Alle Bahnpaare sind über dem Umfang untereinander gleich gestaltet, wobei die äußeren Kugelbahnen 21 und die inneren Kugelbahnen 22 in ihrer Gestaltung den ersten Bahnpaaren ($21_1$, $22_1$) aus Figur 1 entsprechen. Es sind somit S-Bahnen mit umgekehrter Bahnöffnung, d. h. die Bahnpaare öffnen sich in der Gelenkmittelebene E in Richtung zum Boden 13 hin.

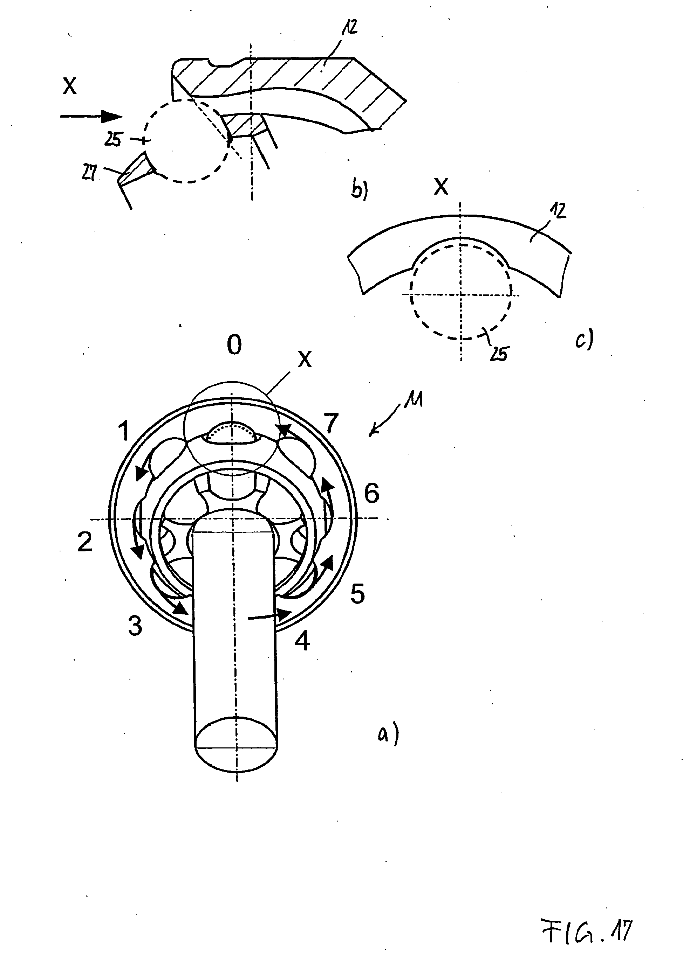

In Figur 17 ist ein Gelenk nach Figur 12, d. h. ein Gelenk nach Art eines Acht-Kugel-SX-Gelenkes in maximaler Beugestellung gezeigt. Gleiche Einzelheiten sind mit gleichen Bezugsziffern bezeichnet wie in Figur 1. Auf die vorangehende Beschreibung wird Bezug genommen. Es ist zu erkennen, daß eine der Kugeln 25 in der Gelenkbeugeebene (0) so weit aus ihrer äußeren Kugelbahn 21 ausgetreten ist, daß sie den Kontakt zum Außenteil komplett verliert, allerdings ohne daß ein Verlieren der Kugel 25 möglich ist. Die Drehmomentübertragung wird von den sieben übrigen Kugeln (1-7) überwiegend wahrgenommen.

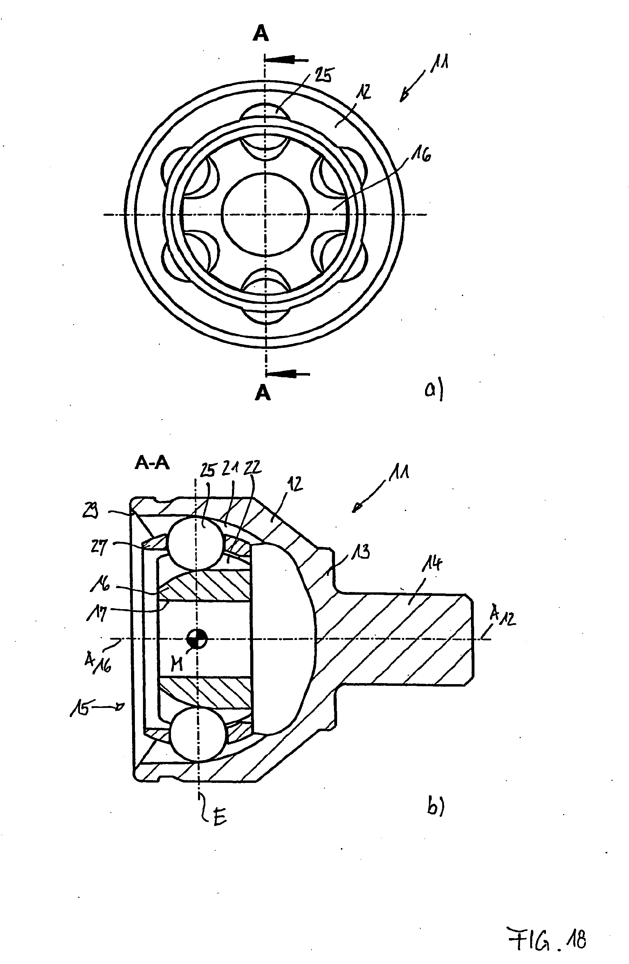

In Figur 18 ist ein nicht erfindungsgemäßes Gleichlaufgelenk mit sechs Kugeln dargestellt, wobei gleiche Einzelheiten mit gleichen Bezugsziffern wie in den vorangegangenen Figuren bezeichnet sind. Alle Bahnpaare aus äußeren Kugelbahnen 21 und inneren Kugelbahnen 22 sind untereinander gleich, wobei sie aus Kreisbögen mit zueinander versetzten Mittelpunkten und tangential anschließenden Geraden bestehen. Von der Gelenköffnungsseite sind die Bahnen jeweils hinterschnittfrei, so daß dieses Gelenk als UF-Gelenk bezeichnet wird (undercut-free tracks).

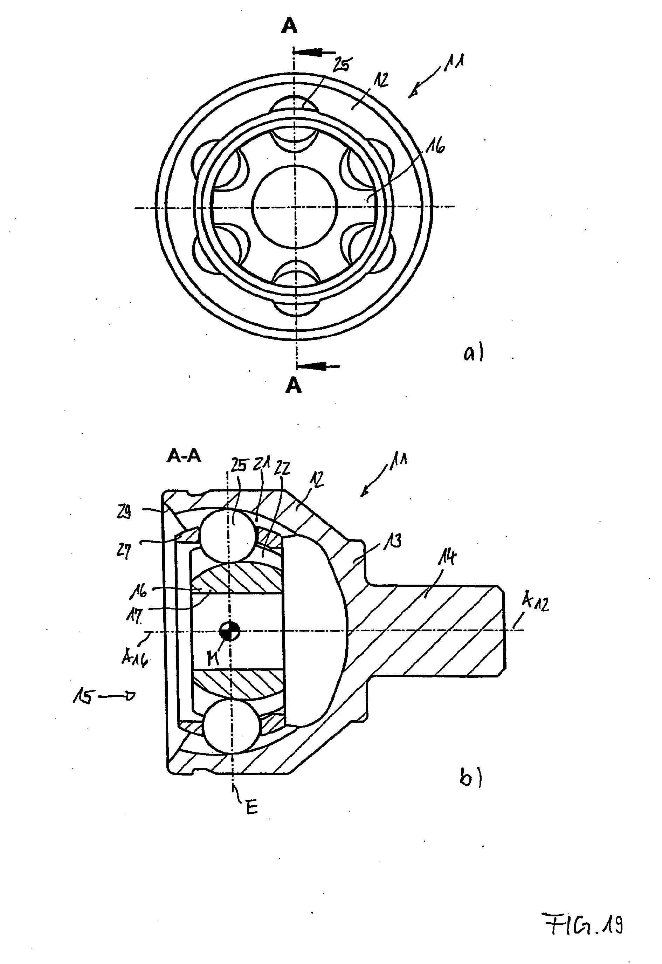

In Figur 19 ist ein Gleichlaufgelenk mit sechs Kugeln dargestellt, wobei gleiche Einzelheiten mit gleichen Bezugsziffern wie in den vorangegangenen Figuren bezeichnet sind. Alle Bahnpaare aus äußeren Kugelbahnen 21 und inneren Kugelbahnen 22 sind untereinander gleich, wobei sie ausschließlich aus Kreisbögen mit zueinander versetzten Mittelpunkten bestehen, so daß sie in allen Beugestellungen eine Winkelöffnung im Bereich des Kugelkontaktes erzeugen, die sich jeweils zur Öffnungsseite hin öffnet. Gelenke dieser Art werden als AC-Gelenke (angular contact tracks) bezeichnet.

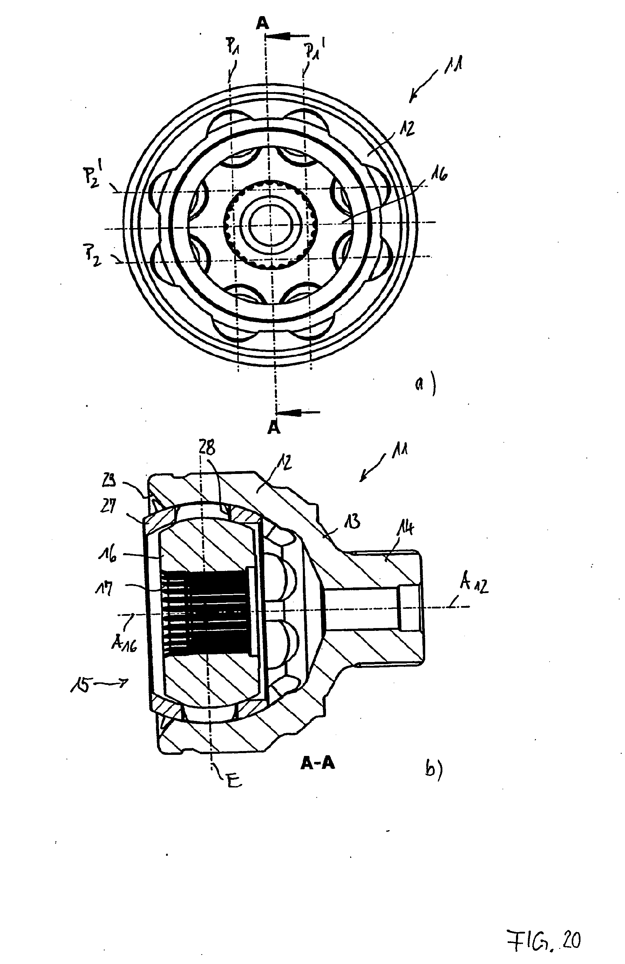

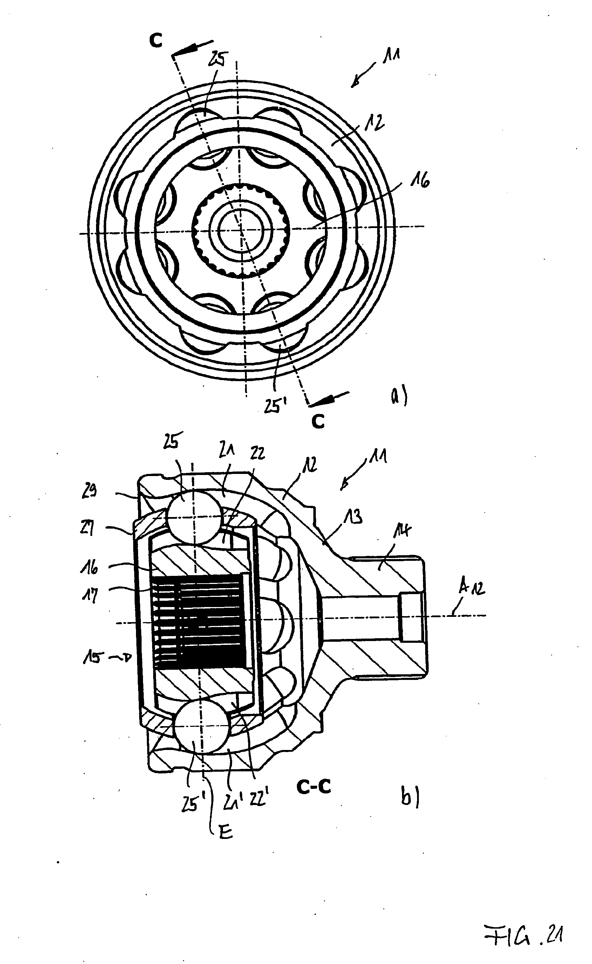

In den Figuren 20 und 21 sind Gleichlaufgelenke dargestellt, die jeweils paarweise benachbarte Bahnpaare aus äußeren Kugelbahnen 21, 21' und inneren Kugelbahnen 22, 22' haben, die in zueinander parallelen Ebenen P1, P1' und P2, P2' verlaufen, d. h. die Mittellinien der Bahnpaare liegen nicht in radialen Ebenen durch die Mittelachsen, sondern in Ebenen, die von Radialebenen durch die Mittelachsen jeweils gleichen entgegengesetzten Abstand haben. Hierbei sind bevorzugt jeweils zwei Kugeln 25, 25' in einem einzigen Käfigfenster 28 gehalten, wie dies im Schnitt A-A nach Figur 17b erkennbar ist. Die Bahnform der Bahnpaare ist über dem Umfang untereinander gleich, wobei auch hier wieder S-Bahnen mit umgekehrter Öffnung verwirklicht sind, die sich in der Gelenkmittelebene E zum Boden hin erweitern, wie in Figur 18b zu erkennen ist. Nach den als Zwillingsbahnen zu bezeichnenden Bahnen werden diese Gelenke als TBJ-Gelenke (twin-ball joint) bezeichnet.

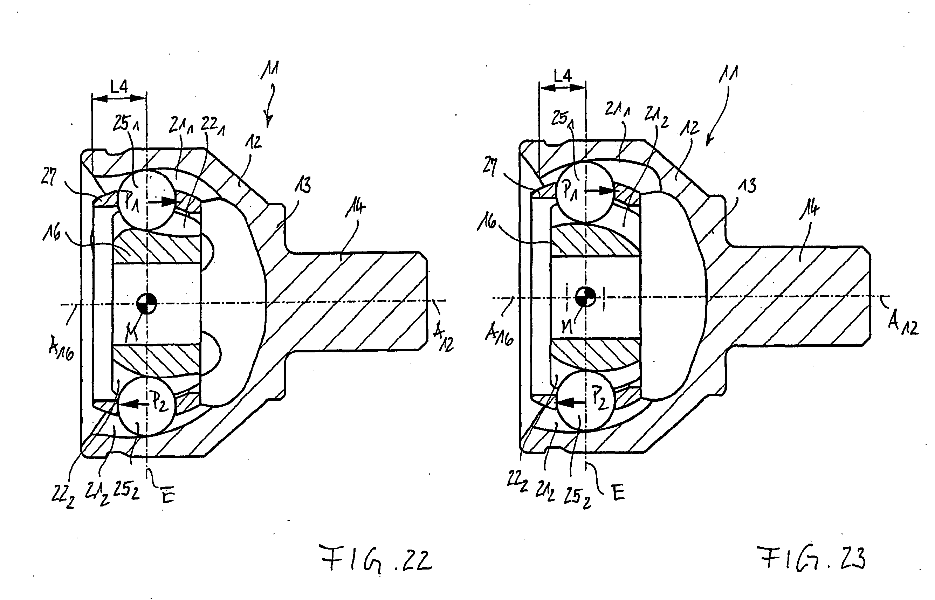

Die Figuren 22 bis 26 werden nachstehend gemeinsam beschrieben. Es sind jeweils nur die wesentlichen Einzelheiten in gleicher Weise wie in den vorhergehenden Figuren, auf die in der Figurenübersicht bereits Bezug genommen ist, beziffert. Auf die vorausgehende Beschreibung wird verwiesen. Für die verschiedenen dargestellten Bahnformen der Kugelbahnen ist jeweils der maximale Abstand $L_4$ der Bahnendkante 32 von der Gelenkmittelebene E eingezeichnet, der jeweils auf den Bahngrund der äußeren Kugelbahnen 21 bezogen ist. Mit Pfeilen $P_1$. $P_2$ sind jeweils die von den Kugeln unter Drehmoment auf den Käfig ausgeübten Axialkräfte angezeigt.

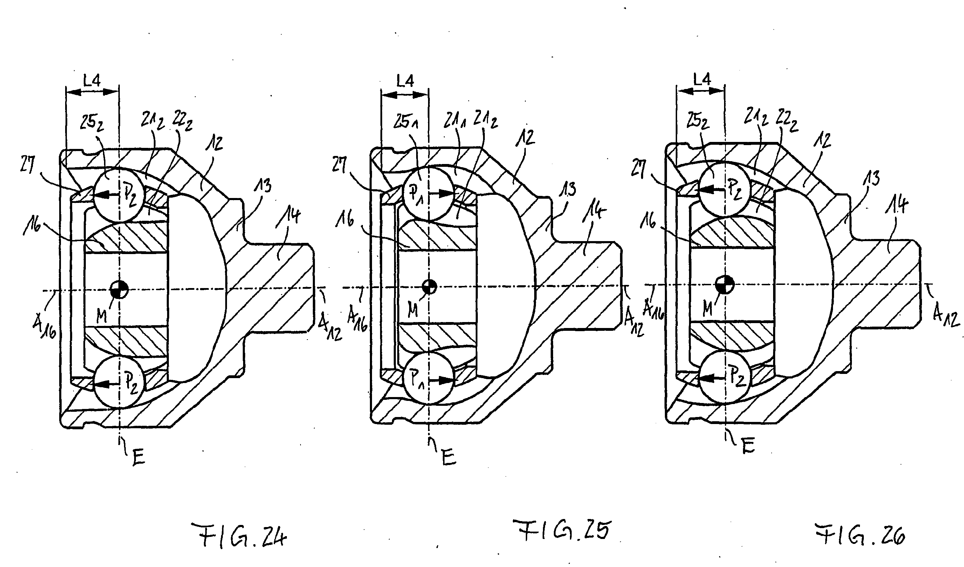

Alle der zuvor beschriebenen Gelenke ausser die in den Figuren 18 und 24 beschriebenen Gelenke sind erfindungsgemäß Festgelenke, die keine wesentliche Axialverschiebung zwischen Gelenkaußenteil und Gelenkinnenteil zulassen, sondern die einen ortsfesten Gelenkmittelpunkt M haben, in dem sich die Achsen von Gelenkaußenteil und Gelenkinnenteil bei Gelenkbeugung bzw. Abwinkelung schneiden.

Bezugszeichenliste

| | |
|---|---|
| 11 | Gelenk |
| 12 | Gelenkaußenteil |
| 13 | Boden |
| 14 | Zapfen |
| 15 | Öffnung |
| 16 | Gelenkinnenteil |
| 17 | Innenöffnung |
| 18 | Welle |
| 19 | innere Führungsfläche |
| 20 | äußere Führungsfläche |

21 erste äußere Kugelbahn
22 erste innere Kugelbahn
23 zweite äußere Kugelbahn
24 zweite innere Kugelbahn
25 erste Kugel
26 zweite Kugel
27 Kugelkäfig
28 Käfigfenster
29 konische Ringfläche
30 Käfigfläche außen
31 Käfigfläche innen
32 Bahnendkante
33 äußere Umfangskante
34 Käfigerhöhung
35 Käfigsteg
36 zylindrische Erweiterung
37 Mantellinie

**Patentansprüche**

1. Kugelgleichlauffestgelenk (11) umfassend ein Gelenkaußenteil (12) mit äußeren Kugelbahnen (21), ein Gelenkinnenteil (16) mit inneren Kugelbahnen (22), drehmomentübertragende Kugeln (25), die in Bahnpaaren aus äußeren Kugelbahnen (21) und inneren Kugelbahnen (22) geführt sind, wobei zumindest ein Teil der Bahnpaare (21, 22) aus äußeren Kugelbahnen (21) und inneren Kugelbahnen (22) sich bei gestrecktem Gelenk in der Gelenkmittelebene in Richtung zum Boden (13) öffnet und einen Kugelkäfig (27) mit umfangsverteilten Käfigfenstern (28), in denen die Kugeln (25) bei gestrecktem Gelenk gemeinsam in der Gelenkmittelebene Ebene E gehalten sind und bei Beugung des Gelenks jeweils auf eine winkelhalbierende Ebene geführt werden, mit zumindest einer Gelenköffnung (15) des Gelenkaußenteils (12), die eine ringförmige Anschlagfläche (29) bildet, und mit einer Welle (18), die die Gelenköffnung (15) durchsetzt und mit dem Gelenkinnenteil (16) verbunden ist, und bei maximalem Betriebsbeugewinkel $\beta_{max}$ des Gelenks an der ringförmigen Anschlagfläche (29) anschlägt, wobei die an der ringförmigen Anschlagfläche (29) anschlagenden Mantellinien der Welle (18) einen Öffnungskonus erzeugen,
   **dadurch gekennzeichnet,**
   **daß** bei maximalem Betriebsbeugewinkel ($\beta_{max}$) des Gelenks jeweils zumindest eine Kugel (25) von der Bahnendkante der äusseren Kugelbahn und einer äussern Umfangskante des zugehörigen käfigfensters im Kugelkäfig verliergesichert gehalten wird und an der Gelenköffnung (15) des Gelenkaußenteils (12) so weit aus der äußeren Kugelbahn (21) austritt, daß der Mittelpunkt K der Kugel (25) einen achsparallelen Abstand $L_1$ von der Gelenkmittelebene E hat und einen achsparallelen Abstand $L_3$ vom Öffnungskonus hat, wobei $L_1/L_3$ kleiner 2,9 ist.

2. Gelenk nach Anspruch 1,
   **dadurch gekennzeichnet,**
   **daß** $L_1/L_3$ kleiner 2,5 ist. -

3. Gelenk nach einem der Ansprüche 1 oder 2,
   **dadurch gekennzeichnet,**
   **daß** bei maximalem Betriebsbeugewinkel ($\beta_{max}$) des Gelenks jeweils zumindest eine Kugel (25) an der Gelenköffnung (15) des Gelenkaußenteils (12) so weit aus der äußeren Kugelbahn (21) austritt, daß der Mittelpunkt K der Kugel (25) einen achsparallelen Abstand $L_1$ von der Gelenkmittelebene E hat, der größer ist, als der maximale achsparallele Abstand $L_4$ der Bahnendkante der äußeren Kugelbahn (21) von der Gelenkmittelebene, womit $L_1 > L_4$ ist.

4. Gelenk nach Anspruch 3,
   **dadurch gekennzeichnet,**
   **daß** etwa zugleich mit $L_1 > L_4$ auch $L_1/L_3$ kleiner 2,2 ist.

5. Gelenk nach einem der Ansprüche 1 bis 4,
   **dadurch gekennzeichnet,**
   **daß** die zumindest eine Kugel (25) bei maximalen Betriebsbeugewinkel ($\beta_{max}$) innerhalb ihres Käfigfensters (28) im Kugelkäfig (27) gehalten wird.

6. Gelenk nach einem der Ansprüche 1 bis 5,
   **dadurch gekennzeichnet,**
   **daß** die ringförmige Anschlagfläche (29) konisch nach außen zur Gelenköffnung (15) geöffnet ist.

7. Gelenk nach einem der Ansprüche 1 bis 6,
   **dadurch gekennzeichnet,**
   **daß** die Welle (18) mit dem Gelenkinnenteil (16) in Steckverbindung miteinander verbunden ist.

8. Gelenk nach einem der Ansprüche 1 bis 7,
   **dadurch gekennzeichnet,**
   **daß** die äußeren Kugelbahnen (21) im Gelenkaußenteil (12) im Querschnitt durch einen Kreisbogen definiert sind.

9. Gelenk nach einem der Ansprüche 1 bis 7,
   **dadurch gekennzeichnet,**
   **daß** die äußeren Kugelbahnen (21) im Gelenkaußenteil (12) im Querschnitt durch einen Ellipsenabschnitt definiert sind.

10. Gelenk nach einem der Ansprüche 1 bis 9,
    **dadurch gekennzeichnet,**
    **daß** die zumindest eine Kugel (25) bei maximalem Betriebsbeugewinkel ($\beta_{max}$) von der Bahnendkante (32) der äußeren Kugelbahn (21) und einer äußeren Umfangskante (33) des zugehörigen Käfigfensters (28) gehalten wird.

11. Gelenk nach einem der Ansprüche 1 bis 10,
    **dadurch gekennzeichnet,**
    **daß** bei maximalem Betriebsbeugewinkel ($\beta_{max}$) in der Gelenkbeugeebene eine Öffnungsweite S zwischen der äußeren Bahnkante (33) des Käfigfensters (28) und der Bahnendkante (32) der äußeren Kugelbahn (21) im Längsschnitt durch das Gelenk kleiner als der Kugeldurchmesser DB ist.

12. Gelenk nach einem des Ausprüche 1 bis 11,
    **dadurch gekennzeichnet,**
    **daß** sich die äußeren Kugelbahnen (21) des genannten Teils der Bahnpaare (21, 22) zur Gelenköffnung (15) hin nach radial außen erweitern und die inneren Kugelbahnen (22) des genannten Teils der Bahnpaare zum Boden (13) hin nach radial außen ansteigen.

13. Gelenk nach Anspruch 12,
    **dadurch gekennzeichnet,**
    **daß** die äußeren Kugelbahnen (21) und die inneren Kugelbahnen (22) des genannten Teils der Bahnpaare jeweils im Längsschnitt S-förmig verlaufen.

14. Gelenk nach einem der Ansprüche 1 bis 13,
    **dadurch gekennzeichnet,**
    **daß** jeweils die Mittellinien zweier benachbarter Bahnpaare (21, 22) aus äußeren Kugelbahnen (21) und inneren Kugelbahnen (22) in zueinander parallelen Ebenen verlaufen.

15. Gelenk nach einem der Ansprüche 1 bis 14,
    **dadurch gekennzeichnet,**
    **daß** zumindest ein Teil der Bahnpaare (21, 22) aus äußeren Kugelbahnen (21) und inneren Kugelbahnen (22) sich bei gestrecktem Gelenk in der Gelenkmittelebene zur Gelenköffnung (15) hin erweitern.

16. Gelenk nach einem der Ansprüche 1 bis 15,
    **dadurch gekennzeichnet,**
    **daß** beim Abbeugen des Gelenks mindestens eine Kugel (25) so weit aus dem Gelenkaußenteil (12) austritt, daß sie den Kontakt mit der entsprechenden äußeren Kugelbahn (21) verliert.

17. Gelenk nach einem der Ansprüche 1 bis 16,
    **dadurch gekennzeichnet,**

**daß** beim Abbeugen des Gelenks mindestens eine Kugel (25) so weit aus dem Gelenkaußenteil (12) austritt, daß sie den entsprechenden Kontakt mit der äußeren Kugelbahn (21) verliert, aber dennoch zwischen Bahnendkante (32) und äußerer Kante des Käfigfensters (28) im Gelenk gehalten wird.

18. Gelenk nach einem der Ansprüche 1 bis 17,
**dadurch gekennzeichnet,**
**daß** beim Abbeugen des Gelenks mindestens eine Kugel (25) so weit aus dem Gelenkaußenteil (12) austritt, daß sie den Kontakt mit den entsprechenden äußeren und inneren Kugelbahnen (21, 22) verliert, und daß diese Kugel (25) keine Kraft mehr übertragen kann.

19. Gelenk nach einem der Ansprüche 1 bis 18,
**dadurch gekennzeichnet,**
**daß** beim Abbeugen des Gelenks mindestens eine Kugel (25) so weit aus dem Gelenkaußenteil (12) austritt, daß sie den Kontakt mit den entsprechenden äußeren und inneren Kugelbahnen (21, 22) verliert, und daß dann bei einem Sechs-Kugel-Gelenk maximal fünf Kugeln das Drehmoment übertragen.

20. Gelenk nach einem der Ansprüche 1 bis 18,
**dadurch gekennzeichnet,**
**daß** beim Abbeugen des Gelenks mindestens eine Kugel (25) so weit aus dem Gelenkaußenteil (12) austritt, daß sie den Kontakt mit den entsprechenden äußeren und inneren Kugelbahnen (21, 22) verliert, und daß dann bei einem Acht-Kugel-Gelenk maximal sieben Kugeln das Drehmoment übertragen.

21. Gelenk nach einem der Ansprüche 1 bis 18,
**dadurch gekennzeichnet,**
**daß** der Montagebeugewinkel des Gelenkes größer ist als der Betriebsbeugewinkel, um sicherzustellen, daß die Kugeln (25) bei maximalem Beugewinkel ($\beta_{max}$) noch im Gelenk gehalten werden.

**Claims**

1. Homokinetic fixed ball joint (11) comprising a joint outer part (12) with outer ball tracks (21), a joint inner part (16) with inner ball tracks (22), torque-transferring balls (25), which are guided by pairs of outer ball tracks (21) and inner ball tracks (22), wherein at least a part of the pairs of ball tracks (21, 22) consisting of outer ball tracks (21) and inner ball tracks (22) open in the center plane of the joint to the direction of a base (13) when the joint is aligned, and with a ball cage (27) with cage windows (28) distributed circumferentially, in which the balls (25) are commonly held in the joint center plane E, when the joint is aligned and as the joint is deflected they are guided in each case onto a bisecting plane, with at least one joint opening (15) of the joint outer part (12) which forms an annular abutment surface (29), and with a shaft (18) penetrating the joint opening (15), wherein the shaft (15) is being connected to the joint inner part (16) and which in case of a maximum operational deflection angle $\beta_{max}$ of the joint abuts against the annular abutment surface (29), wherein the surface lines of the shaft (18) abutting against the annular abutment surface (29) generate an opening cone, **characterized in that** in case of a maximum operational deflection angle ($\beta_{max}$) of the joint in each case a ball (25) is respectively held safely against escaping by the edge end of the track of the outer ball track and an outer circumferential edge of the associated cage window in the ball cage and exits the outer ball track (21) at the joint opening (15) of the joint outer part (12) thus far that the center point K of the ball (25) has an axially parallel distance $L_1$ from the joint center plane E and an axially parallel distance $L_3$ from the opening cone, wherein $L_1/L_3$ is smaller than 2,9.

2. Joint according to claim 1, **characterized in that** $L_1/L_3$ is smaller than 2,5.

3. Joint according to one of claims 1 or 2, **characterized in that** in case of the maximum operational deflection angle ($\beta_{max}$) of the joint in each case at least one ball (25) exits the outer ball track (21) at the opening of the joint (15) of the joint outer part (12) thus far that the central point K of the ball (25) has an axially parallel distance $L_1$ from the center plane of the joint E, which is bigger than the maximum axially parallel distance $L_4$ of the end edge of the outer ball track (21) from the joint center plane, and wherewith $L_1 > L_4$.

4. Joint according to claim 3, **characterized in that** approximately together with $L_1 > 4$ also $L_1/L_3$ is smaller than 2,2.

5. Joint according to one of the claims 1 to 4, **characterized in that** the at least one ball (25) at a maximum operational

deflection angle ($\beta_{max}$) is held in its cage window (28) in the ball cage (27).

6. Joint according to one of claims 1 to 5, **characterized in that** the annular abutment surface (29) opens outwardly in a cone-shaped-manner to the joint opening (15).

7. Joint according to one of claims 1 to 6, **characterized in that** the shaft (18) is connected to the joint inner part (16) with a plug-in connection.

8. Joint according to one of claims 1 to 7, **characterized in that** in the joint outer part (12) the outer ball tracks (21) are defined by a circular arc in a cross section.

9. Joint according to one of claims 1 to 7, **characterized in that** the outer ball tracks (21) in the joint outer part (12) are defined by an ellipsis in a cross section.

10. Joint according to one of claims 1 to 9, **characterized in that** in case of a maximum operational deflection angle ($\beta_{max}$) at least one ball (25) is held by the edge end of the track (32) of the outer ball track (21) and an outer circumferential edge (33) of the associated cage opening (28).

11. Joint according to one of claims 1 to 10, **characterized in that** in case of a maximum operational deflection angle ($\beta_{max}$) in the joint deflection plane a width of the opening S between the track outer edge (33) of the cage window (28) and the track edge end (32) of the outer ball track (21) is smaller than the diameter of the ball DB in a longitudinal section.

12. Joint according to one of claims 1 to 11, **characterized in that** the outer ball tracks (21) of said part of the pairs of ball tracks (21, 22) in the direction to the joint opening (15) widen radially outwards and the inner ball tracks (22) of said part of the pairs of tracks in the direction to the base (13) rise up radially outwards.

13. Joint according to claim 12, **characterized in that** the outer ball tracks (21) and the inner ball tracks (22) of said part of pairs of tracks extend in each case in a S-shape in a longitudinal section.

14. Joint according to one of claims 1 to 13, **characterized in that** in each case the center lines of two adjacent pairs of tracks (21, 22) from outer ball tracks (21) and inner ball tracks (22) extend in planes being parallel to one another.

15. Joint according to one of claims 1 to 14, **characterized in that** at least one part of the pairs of tracks (21, 22) from outer ball tracks (21) and inner ball tracks (22) in the joint center plane widen in the direction to the opening of the joint (15), with the joint being aligned.

16. Joint according to one of claims 1 to 15, **characterized in that,** when the joint is deflected at least one ball (25) exits the joint outer part (12) thus far that it looses the contact to the respective outer ball track (21).

17. Joint according to one of claims 1 to 16, **characterized in that** when the joint is deflected at least one ball (25) exits the joint outer part (12) thus far that it looses the respective contact to the outer ball track (21), but nevertheless is held between the edge end of the track (32) and the outer edge of the cage window (28) in the joint.

18. Joint according to one of the claims 1 to 17, **characterized in that** when the joint is deflected at least one ball (25) exits the joint outer part (12) thus far that it looses the contact with the respective outer and inner ball tracks (21, 22) and that this ball (25) can not anymore transmit force.

19. Joint according to one of claims 1 to 18, **characterized in that** when the joint is deflected at least one ball (25) exits the joint outer part (12) thus far that it looses the contact to the respective outer and inner ball tracks (21, 22) and that then in the case of a six-ball joint the torque is transmitted by maximum five balls.

20. Joint according to one of claims 1 to 18, **characterized in that** when the joint is deflected at least one ball (25) exits the joint outer part (12) thus far that it looses the contact to the respective outer and inner ball tracks (21, 22) and that then in the case of an eight-ball joint the torque is transmitted by maximum seven balls.

21. Joint according to one of claims 1 to 18, **characterized in that** the mounting deflection angle of the joint is bigger than the operational deflection angle to assure that the balls (25) can still be held in the joint in case of a maximum

deflection angle ($\beta_{max}$).

**Revendications**

1. Joint homocinétique fixe à billes (11) comprenant une partie de joint extérieure (12) avec des chemins de roulement à billes extérieurs (21), une partie de joint intérieure (16) avec des chemins de roulement à billes intérieurs (22), des billes (25) de transmission de couple, qui sont guidées par paires de chemins de roulement à billes extérieurs (21) et de chemins de roulement à billes intérieurs (22), dans quel cas au moins une partie des paires de chemins de roulement (21, 22) constitués de chemins de roulement extérieurs (21) et de chemins de roulement à billes intérieurs (22) s'ouvre dans le plan médian vers un fond du joint (13) lors de l'alignement du joint, et une cage à billes (27) avec des fenêtres de cage (28) réparties circonférentiellement, dans lesquelles les billes (25) sont maintenues mutuellement dans le plan médian du joint E lorsque le joint est aligné, et lors de la flexion du joint elles sont respectivement guidées sur un plan bissecteur, avec au moins une ouverture du joint (15) de la partie extérieure du joint (12) qui forme une surface de butée annulaire (29), et avec un arbre (18) qui interpénètre l'ouverture de joint (15) et qui est relié à la partie du joint (16) intérieure, et qui bute contre la surface de butée annulaire (29) quand l'angle de flexion opérationnel ($\beta_{max}$) du joint est au maximum, les génératrices de l'arbre (18) butant contre la surface de butée annulaire (29) générant un cône d'ouverture, **caractérisé en ce qu'**en cas d'angle de flexion maximal opérationnel ($\beta_{max}$) au maximum au moins une bille (25) est maintenue de manière à être sécurisée contre la perte par le bord final du chemin de roulement extérieur et par le bord périphérique extérieur de la fenêtre de cage associée et elle sort au niveau de l'ouverture de joint aussi loin du chemin de roulement (21) extérieur à l'ouverture du oint (15) de la partie extérieure du joint (12), que le point central K de la bille (25) a une distance à axes parallèles $L_1$ du plan médian de joint E et une distance d'axes parallèles $L_3$ depuis le cône d'ouverture, $L_1/L_3$ étant plus petit que 2,9.

2. Joint selon la revendication 1, **caractérisé en ce que** $L_1/L_3$ est plus petit que 2,5.

3. Joint selon l'une des revendications 1 ou 2, **caractérisé en ce qu'**en cas d'angle de flexion maximal opérationnel ($\beta_{max}$) du joint respectivement au moins une bille (25) sort aussi loin du chemin der roulement extérieur (21) au niveau de l'ouverture du joint (15) et quitte la partie extérieure du joint (12), que le point médian K de la bille (25) a une distance $L_1$ d'axes parallèles du plan médian de joint E qui est plus grande que la distance maximale d'axes parallèles $L_4$ du bord terminal du chemin de roulement à billes (21) extérieur du plan médian du joint, $L_1$ étant ainsi $L_1 > L_4$.

4. Joint selon la revendication 3, **caractérisé en ce qu'**environ en même temps que $L_1 > L_4$, $L_1/L_3$ est aussi plus petit que 2,2.

5. Joint selon l'une des revendications 1 à 4, **caractérisé en ce qu'**en cas d'angle de flexion maximal en opération ($\beta_{max}$) l'au moins une bille (25) est maintenue à l'intérieur de la cage à billes (27) dans sa fenêtre de cage.

6. Joint selon l'une des revendications 1 à 5, **caractérisé en ce que** la surface de butée annulaire (29) est ouverte de façon conique vers l'extérieur jusqu'à l'ouverture du joint (15).

7. Joint selon l'une des revendications 1 à 6, **caractérisé en ce que** l'arbre (18) est relié à la partie intérieure du joint (16) à l'intermédiaire d'une connexion par fiche.

8. Joint selon l'une des revendications 1 à 7, **caractérisé en ce que** dans la partie extérieure du joint (12) les chemins de roulement à billes extérieurs (21) sont définis par un arc de cercle en coupe transversale.

9. Joint selon l'une des revendications 1 à 7, **caractérisé en ce que** les chemins de roulement à billes extérieurs (21) dans la partie extérieure du joint (12) sont définis par une section d'ellipses en section transversale.

10. Joint selon l'une des revendications 1 à 9, **caractérisé en ce qu'**en cas d'angle de flexion maximal opérationnel ($\beta_{max}$) l'au moins une bille (25) est maintenue par le bord d'extrémité du chemin (32) du chemin de roulement à billes extérieur (21) et par un bord circonférentiel (33) extérieur de la fenêtre de cage associée (28).

11. Joint selon l'une des revendications 1 à 10, **caractérisé en ce qu'**en cas d'angle de flexion maximal opérationnel ($\beta_{max}$) dans le plan de fléchissement du joint une ampleur d'ouverture S entre le bord extérieur (33) de la fenêtre de la cage (28) et du bord d'extrémité de chemin (32) du chemin de roulement à billes extérieur (21) est plus petite que le diamètre de bille DB, en coupe longitudinale à travers le joint.

**12.** Joint selon l'une des revendications 1 à 11, **caractérisé en ce que** pour l'ouverture du joint (15) les chemins de roulement à billes extérieurs (21) de la partie précitée des paires de chemins de roulement (21, 22) s'élargissent radialement vers l'extérieur et les chemins de roulement à billes intérieurs (22) de la partie précitée des paires de chemin de roulement croissent vers un fond (13) radialement vers l'extérieur.

**13.** Joint selon la revendication 12, **caractérisé en ce que** les chemins de roulements à billes extérieurs (21) et les chemins de roulements à billes intérieurs (22) de la partie précitée des paires de chemin de roulement s'étendent respectivement en forme de S en coupe longitudinale.

**14.** Joint selon l'une des revendications 1 à 13, **caractérisé en ce que** les lignes médianes de deux paires de chemins de roulement adjacentes (21, 22) de chemins de roulement à billes extérieurs (21) et intérieurs (22) s'étendent dans des plans parallèles les unes aux autres.

**15.** Joint selon l'une des revendications 1 à 14, **caractérisé en ce qu'**au moins une partie des paires de chemins de roulement (21, 22) de chemins de roulement à billes extérieurs (21) et de chemins de roulement à billes intérieurs (22) s'élargissent lorsque le joint est fléchi dans le plan médian de joint pour ouvrir le joint (15).

**16.** Joint selon l'une des revendications 1 à 15, **caractérisé en ce que** lors de la déflexion du joint au moins une bille (25) sort aussi loin de la partie du joint (12) extérieure qu'elle perd le contact avec le chemin de roulement à billes extérieur associé (21).

**17.** Joint selon l'une des revendications 1 à 16, **caractérisé en ce que** lors de la déflexion du joint au moins une bille (25) sort aussi loin de la partie du joint (12) extérieure qu'elle perd le contact correspondant avec le chemin de roulement à billes extérieur (21), mais est néanmoins retenue entre le bord terminal (32) de chemin de roulement (32) et le bord extérieur de la fenêtre de cage (28) dans le joint.

**18.** Joint selon l'une des revendications 1 à 17, **caractérisé en ce que** lors de la déflection du joint au moins une bille (25) sort aussi loin de la partie du joint extérieure (12) qu'elle perd le contact avec les chemins de roulement à billes associés extérieurs et intérieurs (21, 22) et **en ce que** cette bille (25) ne peut plus transmettre de force.

**19.** Joint selon l'une des revendications 1 à 18, **caractérisé en ce que** lors de la déflexion du joint au moins une bille (25) sort aussi loin de la partie du joint (12) extérieure, qu'elle perd le contact avec les chemins de roulement à billes extérieurs et intérieurs (21, 22) et **en ce que** dans un joint à six billes maximalement cinq billes transmettent le couple.

**20.** Joint selon l'une des revendications 1 à 18, **caractérisé en ce que** lors de la déflexion du joint au moins une bille (25) sort aussi loin de la partie extérieure du joint (12) qu'elle perd le contact avec les chemins de roulement à billes extérieures et intérieures (21, 22) et qu'alors dans le cas d'un joint à huit billes maximalement sept billes transmettent le couple.

**21.** Joint selon l'une des revendications 1 à 18, **caractérisé en ce que** l'angle de montage de flexion du joint est plus grand que l'angle opérationnel de flexion maximale pour assurer qu'en cas d'angle de flexion maximale ($\beta_{max}$) les billes (25) sont encore retenues dans le joint.

FIG. 1

$$L1 = RB \cdot \tan\left(\frac{\beta\max}{2}\right)$$

FIG.2

$$L2 = \frac{RB}{\tan(\beta\,max)} - \frac{DW}{2 \cdot \sin(\beta\,max)}$$

FIG.3

$$1 < \frac{DB}{S}$$

FIG.4

X

$12$

$T_1$  $T_2$  $21_1$

K

$32$

α  α

b)

$21_1$  $11$

X

$29$

α

$25_1$

$22_1$

$Z_2$

$Z_1$

M

$A_{12}$

βmax

$A_{16}$

E

a)

FIG.5

FIG. 6

L4

L1

$A_{12}$

$z_2$

$z_1$

M

$\beta max$

$A_{16}$

E

L4

L1

L 4 > L1

$2_1$

$12$

$32$

$27$

K

$25$

E

FIG.7

FIG. 8

L1 > L4

FIG. 9

FIG. 10

a)

b)

FIG. 12

a)

b) A-A

c) B-B

A

$25_1$

$12$

$16$

$11_1$

$25_2$

A

a)

$11$

A-A $25_1$ $21_1$ $22_1$ $12$

$23$

$27$

$13$

$16$

$14$

$17$

$A_{12}$

$z_2$

$A_{16}$

$z_1$ $n$

$15$

$22_2$

$25_2$ E $21_2$

b)

FIG. 13

a)

b)

A-A

FIG.14

FIG. 15

A

25  12

11

16

a)

A

25 21 22

29

27

16

17

11

12

13  14

A 12

M

A 16

15

A-A

b)

E

FIG. 16

X

25

27

12

b)

X

12

25

c)

0

X

1

7

M

2

6

3

5

4

a)

FIG. 17

**A**

25 12 11 16

**A**

a)

**A-A**

25 21 22 12 11

29 13 14

27 A 12

16

17

A 16 M

15 E

b)

FIG. 18

A

25

12

11

16

a)

A

A-A

25  21  22

11

29

12

27

13

14

16

A₁₂

17

A₁₆

15

E

b)

FIG.19

33

a)

A-A

b)

FIG. 20

C

25

11

12

16

25'

C

a)

25   21  22        12   11

29

27                          13

16                          14

17                                   A 12

15

C-C                  b)

25'   21' 22'

E

FIG. 21

EP 1 966 500 B1

FIG. 22

FIG. 23

FIG. 26

FIG. 25

FIG. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040116192 A1